# EUROPÄISCHE PATENTSCHRIFT

(11) **EP 4 786 916 B1**
(45) Veröffentlichungstag und Bekanntmachung des Hinweises auf die Patenterteilung: **02.12.2026**
(21) Anmeldenummer: 25155561.1
(22) Anmeldetag: 03.02.2025
(51) Int. Cl.: G01B 11/06

(54) **VORRICHTUNG UND VERFAHREN ZUR BESTIMMUNG DER SCHICHTDICKE EINER DRAHTBESCHICHTUNG EINES LACKDRAHTES**
DEVICE AND METHOD FOR DETERMINING THE THICKNESS OF A COATING LAYER ON A COATED WIRE OF A ENAMELED WIRE
DISPOSITIF ET PROCÉDÉ DE DÉTERMINATION DE L'ÉPAISSEUR DE COUCHE D'UN REVÊTEMENT DE FIL D'UN FIL DE VERNIS

(43) Veröffentlichungstag der Anmeldung: 05.08.2026
(73) Patentinhaber: Schwering & Hasse Elektrodraht GmbH, 32676 Lügde (DE)
(72) Erfinder: ISERINGHAUSEN, Peter, 32756 Detmold (DE)
(74) Vertreter: Andrejewski - Honke Patent- und Rechtsanwälte Partnerschaft mbB

(56) Entgegenhaltungen:
- CN-U- 211 904 035
- CN-U- 219 121 334
- US-A1- 2016 258 740

## Beschreibung

Die Erfindung betrifft eine Vorrichtung zur Bestimmung der Schichtdicke einer Drahtbeschichtung eines Lackdrahtes, wobei die Vorrichtung zumindest einen Sensor und zumindest eine Drahthalterung aufweist. Darüber hinaus betrifft die Erfindung ein Verfahren zur Bestimmung der Schichtdicke einer Drahtbeschichtung eines Lackdrahtes.

Vorrichtungen und Verfahren der eingangs genannten Art zur Bestimmung der Schichtdicke der Drahtbeschichtung von Lackdrähten sind aus der Praxis in unterschiedlichen Ausführungsformen grundsätzlich bekannt. Die Lackdrähte werden beispielsweise in elektrischen Bauteilen wie Spulen, Motoren, Elektromotoren, Transformatoren und dergleichen verwendet, die wiederum beispielsweise in der Antriebstechnik, im Automobilbereich oder in Windkraftanlagen zum Einsatz kommen. In diesem Zusammenhang sind Informationen über die Schichtdicke der Drahtbeschichtung der Lackdrähte und insbesondere auch über die Gleichmäßigkeit der Schichtdicke der Drahtbeschichtung von Bedeutung. Es ist wünschenswert, eine sowohl in Längsrichtung als auch in Umfangsrichtung der Lackdrähte möglichst gleichmäßige Schichtdicke der Drahtbeschichtung zu realisieren. Das ist etwa bei Flachdrähten, insbesondere bei Rechteckdrähten bzw. Rechteckdrähten mit abgerundeten Ecken, von besonderer Bedeutung. Insbesondere in den Radien solcher Rechteckdrähte soll die Gleichmäßigkeit der Schichtdicke der Drahtbeschichtung möglichst gewährleistet sein. Für die Überprüfung der Schichtdicke der Drahtbeschichtung nach der Herstellung der Lackdrähte ist es vorteilhaft, die Schichtdickenbestimmung mit möglichst wenig aufwendigen Maßnahmen und in kurzer Zeit - im Sinne einer Qualitätskontrolle - durchführen zu können. Nichtsdestoweniger sollen ausreichende Informationen über die Schichtdicke und insbesondere auch über die Gleichmäßigkeit der

Schichtdicke der Drahtbeschichtung zur Verfügung gestellt werden. CN 211 904 035 U offenbart ein Messgerät zur Bestimmung der Schichtdicke eines isolierten Drahtes, bei dem der Draht stationär eingeklemmt wird und ein Wirbelstromsensor kreisförmig um diesen fixierten Draht rotiert.

Es hat sich gezeigt, dass diese Anforderungen mit den aus der Praxis bekannten Maßnahmen nicht immer in zufriedenstellender Weise erfüllt werden können. Beispielsweise sind Vorrichtungen zur Bestimmung der Schichtdicke einer Drahtbeschichtung eines Lackdrahtes bekannt, mit denen die Schichtdicke der Drahtbeschichtung an einzelnen Messpunkten, die auf derselben Längsachse L des Lackdrahtes angeordnet sind, bestimmt werden kann. Die entsprechenden Vorrichtungen und Verfahren sind zwar in der Regel wenig aufwendig ausgestaltet, stellen aber auch verhältnismäßig wenige Informationen über die Schichtdicke der Drahtbeschichtung und insbesondere auch über die Gleichmäßigkeit der Schichtdicke der Drahtbeschichtung bereit. Darüber hinaus ist es bekannt, ein Querschnittsabbild eines Lackdrahtes in Form eines gegossenen Schliffbildes unter dem Mikroskop zu untersuchen. Aus dem entsprechenden Querschnittsabbild können Informationen über die Schichtdicke der Drahtbeschichtung entlang des Drahtumfanges bzw. entlang einer dem Umfang des Lackdrahtes umlaufenden Umfangslinie erhalten werden. Das Verfahren ist aber sehr aufwendig und stellt das entsprechende Querschnittsabbild auch in Bezug auf die Längsrichtung des Lackdrahtes nur an einer einzigen Stelle bereit. Eine Vorrichtung und ein Verfahren zur Bestimmung der Schichtdicke der Drahtbeschichtung eines Lackdrahtes, mit denen ein optimaler Kompromiss zwischen dem Aufwand und den erhaltenen Informationen erreicht wird, ist bisher nicht bekannt. - Hier setzt die Erfindung ein.

Der Erfindung liegt demgegenüber das technische Problem zugrunde, eine Vorrichtung der eingangs genannten Art anzugeben, mit der die Schichtdicke einer Drahtbeschichtung eines Lackdrahtes funktionssicher bestimmt werden kann und mit der insbesondere ausreichende Informationen über die Schichtdicke der Drahtbeschichtung des Lackdrahtes - und vorzugsweise auch über die Gleichmäßigkeit der Schichtdicke der Drahtbeschichtung - mit wenig aufwendigen Maßnahmen erhalten werden können. Darüber hinaus liegt der Erfindung das technische Problem zugrunde, ein entsprechendes Verfahren zur Bestimmung der Schichtdicke einer Drahtbeschichtung eines Lackdrahtes anzugeben.

Zur Lösung des technischen Problems lehrt die Erfindung eine Vorrichtung zur Bestimmung der Schichtdicke einer Drahtbeschichtung eines Lackdrahtes gemäß Anspruch 1.

Es versteht sich, dass der zumindest eine Sensor der erfindungsgemäßen Vorrichtung insbesondere zur Bestimmung der Schichtdicke der Drahtbeschichtung des Lackdrahtes vorgesehen ist. Es ist bevorzugt, dass die Vorrichtung weniger als vier, bevorzugt weniger als drei, Sensoren zur Bestimmung der Schichtdicke der Drahtbeschichtung des Lackdrahtes aufweist. Sehr bevorzugt weist die Vorrichtung lediglich einen Sensor bzw. einen einzigen Sensor zur Bestimmung der Schichtdicke der Drahtbeschichtung des Lackdrahtes auf. Diese Ausführungsformen mit weniger als vier, bevorzugt mit weniger als drei und insbesondere mit lediglich einem bzw. einem einzigen Sensor zur Bestimmung der Schichtdicke der Drahtbeschichtung des Lackdrahtes zeichnen sich insbesondere durch ihre Einfachheit und Wirtschaftlichkeit aus. Es ist bevorzugt, dass der Lackdraht einen Leiterkern, insbesondere aus Kupfer und/oder Aluminium, aufweist, wobei die Oberfläche des Leiterkerns bevorzugt vollständig bzw. im Wesentlichen vollständig mit einer Drahtbeschichtung in Form eines Elektroisolierlackes beschichtet ist. Sehr bevorzugt weist der Elektroisolierlack eine Mehrzahl von Lackschichten auf. Der Elektroisolierlack ist bevorzugt auf Basis zumindest eines Lackpolymers ausgebildet. Mit dem Ausdruck Schichtdicke der Drahtbeschichtung ist im Rahmen der Erfindung insbesondere die Schichtdicke bzw. die Ausdehnung der Drahtbeschichtung quer, insbesondere senkrecht bzw. im Wesentlichen senkrecht, zur Längsrichtung bzw. zu einer Längsachse L des Lackdrahtes gemeint.

Die Drahthalterung ist im Rahmen der Erfindung insbesondere mit der Positionierungseinrichtung verbunden und bevorzugt an und/oder auf der Positionierungseinrichtung angeordnet. Im Rahmen der Erfindung sind die Positionierungseinrichtung - und bevorzugt der Sensor - durch die Steuerungseinrichtung steuerbar und/oder regelbar. Auf diese Weise kann, insbesondere aufgrund der Steuerung und/oder Regelung der Positionierungseinrichtung durch die Steuerungseinrichtung, die Drahthalterung mit dem darin aufnehmbaren bzw. aufgenommenen Lackdraht mittels der Positionierungseinrichtung relativ zu dem Sensor bewegt werden, sodass die Drahthalterung und der Lackdraht in verschiedene Messpositionen gebracht werden können. Das wird unten stehend noch näher erläutert.

Es liegt im Rahmen der Erfindung, dass die zumindest eine Steuerungseinrichtung eine Steuerungs- und/oder Regelungseinheit für den Sensor und/oder eine Steuerungs- und/oder Regelungseinheit für die Positionierungseinrichtung aufweist. Grundsätzlich kann auch lediglich eine Steuerungs- und/oder Regelungseinheit für den Sensor und für die Positionierungseinrichtung vorhanden sein. Es ist außerdem bevorzugt, dass die Steuerungseinrichtung zumindest eine Eingabe- und/oder Auswertungseinrichtung, vorzugsweise in Form eines Computers, aufweist. Vorzugsweise ist die Eingabe- und/oder Auswertungseinrichtung mit der Steuerungs- und/oder Regelungseinheit für den Sensor und/oder mit der Steuerungs- und/oder Regelungseinheit für die Positionierungseinrichtung kommunizierend verbunden. Es ist möglich, dass auch die Steuerungs- und/oder Regelungseinheit für den Sensor mit der Steuerungs- und/oder Regelungseinheit für die Positionierungseinrichtung kommunizierend verbunden ist. Weiterhin ist es bevorzugt, dass die Eingabe- und/oder Auswertungseinrichtung, insbesondere der Computer, zumindest eine Anzeigeeinrichtung, beispielsweise ein Display, aufweist.

Die Drahthalterung dient vorzugsweise zur Fixierung des Lackdrahtes in der erfindungsgemäßen Vorrichtung. Vorzugsweise wird der Lackdraht in der Drahthalterung eingespannt. Dass die Drahthalterung mit dem darin aufnehmbaren bzw. aufgenommenen Lackdraht relativ zu dem Sensor mit zumindest einem Bewegungsfreiheitsgrad, mit zwei Bewegungsfreiheitsgraden, beweglich ist, meint im Rahmen der Erfindung insbesondere, dass die Drahthalterung mit dem darin aufnehmbaren bzw. aufgenommenen Lackdraht für die Bestimmung der Schichtdicke der Drahtbeschichtung mittels der Positionierungseinrichtung mit zumindest zwei Bewegungsfreiheitsgraden, beweglich ist. Somit ist erfindungsgemäß auch der Lackdraht - mittels der Drahthalterung - relativ zu dem Sensor mit zumindest zwei, bevorzugt mit zumindest drei, Bewegungsfreiheitsgraden beweglich. Im Rahmen der Erfindung ist mit dem Ausdruck Bewegungsfreiheitsgrad insbesondere die Bewegungsmöglichkeit der Drahthalterung mit dem darin aufnehmbaren bzw. aufgenommenen Lackdraht mit dem entsprechenden Bewegungsfreiheitsgrad gemeint.

Als entsprechende Bewegungsfreiheitsgrade der Drahthalterung mit dem darin aufnehmbaren bzw. aufgenommenen Lackdraht kommen im Rahmen der Erfindung grundsätzlich insbesondere drei Translationsfreiheitsgrade und drei Rotationsfreiheitsgrade in Betracht und zwar vorzugsweise - unter der Annahme, dass sich eine Längsachse L, vorzugsweise eine Längsmittelachse L, des in der Drahthalterung aufgenommenen Lackdrahtes entlang der z-Achse (in z-Richtung) erstreckt und eine Querachse (x-Achse) in horizontaler Richtung (x-Richtung) quer, insbesondere senkrecht bzw. im Wesentlichen senkrecht zu der Längsachse L bzw. zu der z-Achse erstreckt und dass sich außerdem eine Vertikalachse (y-Achse) in vertikaler Richtung (y-Richtung) quer, insbesondere senkrecht bzw. im Wesentlichen senkrecht zu der x-Achse und der z-Achse erstreckt - : die Translation in horizontaler Richtung (entlang der x-Achse) quer, insbesondere senkrecht bzw. im Wesentlichen senkrecht, zu einer Längsachse L des Lackdrahtes bzw. zu der z-Achse, die Auf-/Abwärtstranslation (entlang der y-Achse) in vertikaler Richtung (y-Richtung) quer, insbesondere senkrecht bzw. im Wesentlichen senkrecht, zu der x-Achse und der z-Achse bzw. zu der x-Richtung und der z-Richtung, die Translation entlang einer Längsachse L des Lackdrahtes (bzw. entlang der z-Achse), die Rotation um eine Längsachse L des Lackdrahtes bzw. um die z-Achse, die Rotation um die x-Achse und die Rotation um die y-Achse. Die entsprechende, den Freiheitsgraden zugeordnete Bewegung der Drahthalterung mit dem darin aufnehmbaren bzw. aufgenommenen Lackdraht wird erfindungsgemäß von der Positionierungseinrichtung realisiert und die Positionierungseinrichtung wird erfindungsgemäß von der Steuerungseinrichtung gesteuert und/oder geregelt. Längsachse L des Lackdrahtes meint im Rahmen der Erfindung im Übrigen insbesondere eine sich in Längsrichtung des Lackdrahtes und somit insbesondere senkrecht zur Drahtquerschnittsfläche erstreckende Achse.

Es ist im Rahmen der Erfindung bevorzugt, dass der Lackdraht bzw. der Leiterkern des Lackdrahtes ein Flachdraht und/oder ein Runddraht ist. Runddraht meint im Rahmen der Erfindung insbesondere einen Leiterkern mit runder Querschnittsfläche. Flachdraht meint im Rahmen der Erfindung insbesondere einen Leiterkern mit ovaler Querschnittsfläche oder mit einer Querschnittsfläche in Form eines Rechteckes (Rechteckdraht), insbesondere in Form eines Rechteckes mit abgerundeten Ecken. Es ist bevorzugt, dass der Leiterkern des Lackdrahtes aus Kupfer und/oder Aluminium bzw. im Wesentlichen aus Kupfer und/oder Aluminium besteht.

Eine Ausführungsform der erfindungsgemäßen Vorrichtung, der im Rahmen der Erfindung ganz besondere Bedeutung zukommt, ist dadurch gekennzeichnet, dass die Drahthalterung mit dem darin aufnehmbaren bzw. aufgenommenen Lackdraht mittels der Positionierungseinrichtung relativ zu dem Sensor mit zumindest drei Bewegungsfreiheitsgraden beweglich ist. Dieser Ausführungsform liegt die Erkenntnis zugrunde, dass die Positionierung der Drahthalterung mit dem darin aufnehmbaren bzw. aufgenommenen Lackdraht relativ zu dem Sensor - und insbesondere die Positionierung des Lackdrahtes in dem Messbereich des Sensors - dann noch flexibler möglich ist, sodass verschiedenste Messpositionen für die Bestimmung der Schichtdicke der Drahtbeschichtung an verschiedensten Messpunkten eingestellt werden können. Grundsätzlich ist es auch möglich, dass die Drahthalterung mit dem darin aufnehmbaren bzw. aufgenommenen Lackdraht mittels der Positionierungseinrichtung relativ zu dem Sensor mit zumindest vier, insbesondere mit zumindest fünf, vorzugsweise mit zumindest sechs bzw. allen sechs, Bewegungsfreiheitsgraden beweglich ist.

Es ist bevorzugt, dass ein Bewegungsfreiheitsgrad der Drahthalterung mit dem darin aufnehmbaren bzw. aufgenommenen Lackdraht die Rotation um eine Längsachse L des Lackdrahtes ist. Wenn hier und nachfolgend von einer Längsachse L des Lackdrahtes die Rede ist, handelt es sich bevorzugt um die Längsmittelachse L des Lackdrahtes. Es ist aber auch möglich, dass die Längsachse L des Lackdrahtes nicht die Längsmittelachse L des Lackdrahtes ist. Es ist auch möglich, dass ein Bewegungsfreiheitsgrad der Drahthalterung mit dem darin aufnehmbaren bzw. aufgenommenen Lackdraht die Translation in horizontaler Richtung quer, insbesondere senkrecht bzw. im Wesentlichen senkrecht zu einer Längsachse L des Lackdrahtes und/oder die Auf-/Abwärtstranslation in vertikaler Richtung ist/sind.

Es ist sehr bevorzugt, dass die Bewegungsfreiheitsgrade der Drahthalterung mit dem darin aufnehmbaren bzw. aufgenommenen Lackdraht die Translation in horizontaler Richtung quer, insbesondere senkrecht bzw. im Wesentlichen senkrecht zu einer Längsachse L des Lackdrahtes und/oder die Auf-/Abwärtstranslation in vertikaler Richtung und/oder die Rotation um eine Längsachse L - insbesondere um die Längsmittelachse L - des Lackdrahtes sind. Dieser Ausführungsform liegt die Erkenntnis zugrunde, dass mit diesen Bewegungsfreiheitsgraden sehr flexibel verschiedene Messpositionen der Drahthalterung mit dem darin aufgenommenen bzw. aufnehmbaren Lackdraht für die Bestimmung der Schichtdicke der Drahtbeschichtung eingestellt werden können, sodass Informationen über die Schichtdicke der Drahtbeschichtung an zahlreichen Messpunkten erhalten werden können. Außerdem kann bevorzugt der Abstand des Lackdrahtes zu dem Sensor flexibel und funktionssicher verändert werden. Es versteht sich im Übrigen, dass sich im Rahmen der Erfindung die Ausdrücke horizontal, vertikal, unterhalb, oberhalb und dergleichen auf den Aufstellzustand der erfindungsgemäßen Vorrichtung beziehen, in dem sich die horizontale Richtung vorzugsweise parallel zu dem Vorrichtungsuntergrund bzw. Aufstelluntergrund erstreckt und wobei sich die vertikale Richtung vorzugsweise quer, insbesondere senkrecht bzw. im Wesentlichen senkrecht zu dem Vorrichtungsuntergrund bzw. Aufstelluntergrund erstreckt. Der Lackdraht ist im Rahmen der Erfindung insbesondere derart in der Drahthalterung aufnehmbar bzw. aufgenommen, dass eine Längsachse L des Lackdrahtes parallel zu dem Vorrichtungsuntergrund bzw. Aufstelluntergrund verläuft.

Gemäß einer sehr bevorzugten Ausführungsform der erfindungsgemäßen Vorrichtung ist der Sensor fixiert und dazu insbesondere in einer Sensorhalterung aufgenommen. Bevorzugt ist der Sensor bzw. die Sensorhalterung nicht mit der Positionierungseinrichtung verbunden. Bevorzugt ist der Sensor oberhalb der Drahthalterung mit dem darin aufnehmbaren bzw. aufgenommenen Lackdraht angeordnet. Grundsätzlich kann der Sensor aber auch seitlich der Drahthalterung angeordnet sein, etwa parallel zum Vorrichtungsuntergrund. Um die Drahthalterung mit dem darin aufnehmbaren bzw. aufgenommenen Lackdraht in eine Messposition zu bringen, wird vorzugsweise die Drahthalterung mit dem darin aufnehmbaren bzw. aufgenommenen Lackdraht - und somit insbesondere auch der Lackdraht - mittels der Positionierungseinrichtung relativ zu dem Sensor bewegt, während der Sensor vorzugsweise fixiert ist bzw. fixiert bleibt.

Eine besonders bevorzugte Ausführungsform der erfindungsgemäßen Vorrichtung ist dadurch gekennzeichnet, dass die Positionierungseinrichtung zumindest einen Positioniertisch, vorzugsweise zumindest zwei Positioniertische, bevorzugt zumindest drei Positioniertische, aufweist und dass sehr bevorzugt jeweils einem Bewegungsfreiheitsgrad der Drahthalterung mit dem darin aufnehmbaren bzw. aufgenommenen Lackdraht zumindest ein Positioniertisch, insbesondere ein Positioniertisch, zugeordnet ist. Durch die - insbesondere jeweils einem Bewegungsfreiheitsgrad der Drahthalterung mit dem darin aufnehmbaren bzw. aufgenommenen Lackdraht zugeordneten - Positioniertische kann eine sehr einfache und funktionssichere Positionierung der Drahthalterung mit dem darin aufnehmbaren bzw. aufgenommenen Lackdraht relativ zu dem Sensor realisiert werden. Die Drahthalterung mit dem darin aufnehmbaren bzw. aufgenommenen Lackdraht kann auf diese Weise von einer Messposition in eine andere Messposition gebracht werden, sodass die Schichtdicke der Drahtbeschichtung an verschiedensten Messpunkten bestimmt werden kann. Es ist im Rahmen der Erfindung auch möglich, dass die Positionierungseinrichtung lediglich einen Positioniertisch aufweist, der dem zumindest einen Bewegungsfreiheitsgrad, insbesondere den zumindest zwei, vorzugsweise den zumindest drei, Bewegungsfreiheitsgraden der Drahthalterung mit dem darin aufnehmbaren bzw. aufgenommenen Lackdraht zugeordnet ist.

Es ist bevorzugt, dass die Positionierungseinrichtung motorisiert ausgebildet ist. Es ist sehr bevorzugt, dass zumindest ein Positioniertisch, vorzugsweise zumindest zwei Positioniertische, bevorzugt zumindest drei Positioniertische, der Positionierungseinrichtung motorisiert ausgebildet ist/sind. Vorzugsweise sind alle Positioniertische der Positionierungseinrichtung motorisiert ausgebildet. Dadurch wird die Positionierung der Drahthalterung mit dem darin aufnehmbaren bzw. aufgenommenen Lackdraht weiter vereinfacht. Insbesondere lässt sich die Drahthalterung dann durch die Steuerung und/oder Regelung der Positionierungseinrichtung mittels der Steuerungseinrichtung in Kombination mit dem zumindest einen motorisiert ausgebildeten Positioniertisch - beispielsweise anhand einer Benutzereingabe oder Benutzervorgabe - automatisch in eine Messposition bringen.

Eine bevorzugte Ausführungsform der erfindungsgemäßen Vorrichtung ist dadurch gekennzeichnet, dass die Positioniertische der Positionierungseinrichtung miteinander verbunden sind und insbesondere übereinander, vorzugsweise aufeinander, angeordnet sind, wobei bevorzugt ein der Translation der Drahthalterung mit dem darin aufnehmbaren bzw. aufgenommenen Lackdraht in horizontaler Richtung quer, insbesondere senkrecht bzw. im Wesentlichen senkrecht, zu einer Längsachse L des Lackdrahtes zugeordneter Positioniertisch oder ein der Auf-/Abwärtstranslation der Drahthalterung mit dem darin aufnehmbaren bzw. aufgenommenen Lackdraht in vertikaler Richtung zugeordneter Positioniertisch eine Basis der Positionierungseinrichtung bildet, wobei besonders bevorzugt ein der Rotation der Drahthalterung mit dem darin aufnehmbaren bzw. aufgenommenen Lackdraht um eine Längsachse L des Lackdrahtes zugeordneter Positioniertisch oberhalb des Positioniertisches bzw. der Positioniertische angeordnet ist, der/die der Translation in horizontaler Richtung und/oder der Auf-/Abwärtstranslation in vertikaler Richtung zugeordnet ist/sind.

Bevorzugt ist der oberste Positioniertisch der Positionierungseinrichtung der Rotation der Drahthalterung mit dem darin aufnehmbaren bzw. aufgenommenen Lackdraht um eine Längsachse L des Lackdrahtes zugeordnet. Unterhalb dieses obersten Positioniertisches ist/sind vorzugsweise der/die Positioniertisch/Positioniertische angeordnet, die der Translation der Drahthalterung in horizontaler Richtung quer, insbesondere senkrecht bzw. im Wesentlichen senkrecht, zu einer Längsachse L des Lackdrahtes und/oder der Auf-/Abwärtstranslation der Drahthalterung in vertikaler Richtung zugeordnet sind. Mit dem die Basis der Positionierungseinrichtung bildenden untersten Positioniertisch werden bevorzugt die oberhalb dieses Positioniertisches angeordneten Positioniertische bewegt, insbesondere verfahren.

Wenn zwischen dem obersten Positioniertisch und dem die Basis der Vorrichtung bildenden untersten Positioniertisch gemäß bevorzugter Ausführungsform ein weiterer mittlerer Positioniertisch vorhanden ist, wird mittels dieses mittleren Positioniertisches vorzugsweise der oberste Positioniertisch, der insbesondere der Rotation der Drahthalterung mit dem darin aufnehmbaren bzw. aufgenommenen Lackdraht um eine Längsachse L des Lackdrahtes zugeordnet ist, bewegt und mittels des obersten Positioniertisches wird besonders bevorzugt lediglich die Drahthalterung bewegt bzw. die Rotation der Drahthalterung mit dem darin aufnehmbaren bzw. aufgenommenen Lackdraht realisiert. Dieser Ausführungsform liegt die Erkenntnis zugrunde, dass auf diese Weise die Bewegung der Drahthalterung mit dem darin aufnehmbaren bzw. aufgenommenen Lackdraht mit den zumindest zwei, vorzugsweise mit den zumindest drei, Bewegungsfreiheitsgraden sehr einfach und funktionssicher realisiert werden kann, wobei nichtsdestoweniger verschiedenste Messpositionen zur Bestimmung der Schichtdicke der Drahtbeschichtung an verschiedensten Messpunkten sehr präzise eingestellt werden können.

Es ist bevorzugt, dass als Positioniertisch zumindest ein Lineartisch und/oder zumindest ein Hubtisch und/oder zumindest ein Rotationstisch eingesetzt wird/werden. Bevorzugt bildet der zumindest eine Lineartisch und/oder der zumindest eine Hubtisch die Basis der Positionierungseinrichtung und ist somit insbesondere der unterste Positioniertisch. Der zumindest eine Rotationstisch ist vorzugsweise der oberste Positioniertisch der Positionierungseinrichtung. Der zumindest eine Hubtisch und/oder der zumindest eine Lineartisch ist vorzugsweise oberhalb des die Basis bildenden Positioniertisches und sehr bevorzugt zwischen dem die Basis bildenden Positioniertisch und dem Rotationstisch angeordnet. Es ist auch möglich, dass die Vorrichtung bzw. die Positionierungseinrichtung lediglich den Rotationstisch aufweist.

Eine bevorzugte Ausführungsform der erfindungsgemäßen Vorrichtung ist dadurch gekennzeichnet, dass zumindest ein Teil der Drahthalterung mit dem Positioniertisch, insbesondere mit dem Rotationstisch, verbunden ist, der der Rotation der Drahthalterung mit dem darin aufnehmbaren bzw. aufgenommenen Lackdraht um eine Längsachse L des Lackdrahtes zugeordnet ist. Auf diese Weise wird realisiert, dass die Drahthalterung mittels des entsprechenden Positioniertisches bzw. mittels des Rotationstisches um eine Längsachse L des Lackdrahtes rotieren kann.

Es ist bevorzugt, dass die Drahthalterung zumindest eine Einspannvorrichtung, vorzugsweise zumindest zwei - insbesondere gegenüberliegend angeordnete - Einspannvorrichtungen aufweist, wobei der Lackdraht in der zumindest einen Einspannvorrichtung einspannbar ist und insbesondere zwischen den zumindest zwei Einspannvorrichtungen einspannbar ist und dass bevorzugt zumindest eine Einspannvorrichtung mit der Positionierungseinrichtung verbunden ist, insbesondere mit dem Positioniertisch verbunden ist, der der Rotation der Drahthalterung mit dem darin aufnehmbaren bzw. aufgenommenen Lackdraht um eine Längsachse L des Lackdrahtes zugeordnet ist und dass weiter bevorzugt zumindest eine Einspannvorrichtung bzw. die andere Einspannvorrichtung drehbar gelagert ist. Zweckmäßigerweise sind beide Einspannvorrichtungen mit der Positionierungseinrichtung verbunden. Eine Einspannvorrichtung ist dabei gemäß bevorzugter Ausführungsform mit dem der Rotation der Drahthalterung mit dem darin aufnehmbaren bzw. aufgenommenen Lackdraht um eine Längsachse L des Lackdrahtes zugeordneten Positioniertisch verbunden und die andere Einspannvorrichtung ist vorzugsweise drehbar an einer Haltevorrichtung gelagert, die mit dem unterhalb des Positioniertisches, der der Rotation der Drahthalterung zugeordnet ist, angeordneten Positioniertisch, insbesondere mit dem zumindest einen Hubtisch, verbunden ist. Auf diese Weise ist es möglich, dass der Draht sehr sicher zwischen den beiden Einspannvorrichtungen einspannbar ist und mittels des Rotationstisches um eine Längsachse L des Lackdrahtes rotierbar ist. Der zumindest eine Sensor ist im Rahmen dieser Ausführungsform bevorzugt derart angeordnet, dass sich der Sensor bzw. der Messbereich des Sensors zwischen den beiden Einspannvorrichtungen der Drahthalterung befindet.

Es ist sehr bevorzugt, dass die zumindest eine Einspannvorrichtung, insbesondere die zumindest zwei Einspannvorrichtungen, zumindest ein Einspannblock ist/sind. Im Rahmen der Erfindung wird im Übrigen insbesondere ein Drahtstück, vorzugsweise ein abgetrenntes Drahtstück, des Lackdrahtes in der Drahthalterung aufgenommen.

Eine bevorzugte Ausführungsform der erfindungsgemäßen Vorrichtung ist dadurch gekennzeichnet, dass der Lackdraht derart in der Drahthalterung aufnehmbar ist bzw. aufgenommen ist, dass eine Längsachse L des Lackdrahtes in Horizontalrichtung bzw. parallel zum Untergrund der Vorrichtung verläuft und/oder dass der Lackdraht derart in der Drahthalterung, vorzugsweise in der zumindest einen Einspannvorrichtung der Drahthalterung, insbesondere zwischen den Einspannvorrichtungen der Drahthalterung, aufnehmbar bzw. aufgenommen, insbesondere einspannbar bzw. eingespannt, ist, dass eine Längsachse L des Lackdrahtes parallel zu einer Rotationsachse der Drahthalterung, insbesondere der zumindest einen Einspannvorrichtung bzw. der Einspannvorrichtungen, verläuft und sehr bevorzugt koaxial dazu verläuft. Grundsätzlich ist es aber auch möglich, dass der Lackdraht derart in der Drahthalterung, insbesondere in der zumindest einen Einspannvorrichtung, aufnehmbar, vorzugsweise einspannbar, ist, dass eine Längsachse L des Lackdrahtes parallel zu einer Rotationsachse der Drahthalterung bzw. der zumindest einen Einspannvorrichtung, verläuft aber nicht koaxial dazu verläuft, sondern versetzt zu einer Rotationsachse der Drahthalterung bzw. der zumindest einen Einspannvorrichtung verläuft.

Es ist sehr bevorzugt, dass der Sensor ein optischer Sensor, insbesondere ein chromatisch-konfokaler Sensor, ist. Im Falle eines chromatisch-konfokalen Sensors wird - insbesondere unter Vorgabe bzw. vorheriger Bestimmung des Brechungsindex der Drahtbeschichtung bzw. des Elektroisolierlackes - vorzugsweise die Distanz des Sensors zu der Oberfläche der Drahtbeschichtung und die Distanz des Sensors zu dem Leiterkern mittels des Sensors gemessen. Aus diesen Distanzen kann dann die Schichtdicke der Drahtbeschichtung ermittelt werden. Grundsätzlich liegen aber auch andere Sensoren, denen andere Methoden zur Schichtdickenbestimmung der Drahtbeschichtung zugrunde liegen, im Rahmen der Erfindung.

Erfindungsgemäß erstreckt sich die Messrichtung des Sensors quer, insbesondere senkrecht bzw. im Wesentlichen senkrecht, zu einer Längsachse L des in der Drahthalterung aufnehmbaren bzw. aufgenommenen Lackdrahtes, wobei sich die Messrichtung insbesondere in vertikaler Richtung erstreckt. Es wurde bereits oben stehend erläutert, dass der Sensor bevorzugt oberhalb der Drahthalterung mit dem darin aufnehmbaren bzw. aufgenommenen Lackdraht angeordnet ist und dass der Lackdraht vorzugsweise derart in der Drahthalterung aufnehmbar ist bzw. aufgenommen ist, dass eine Längsachse L des Lackdrahtes in Horizontalrichtung bzw. parallel zum Untergrund der Vorrichtung verläuft. Dadurch wird insgesamt eine vorteilhafte Anordnung der Vorrichtungskomponenten erreicht, sodass der in der Drahthalterung aufnehmbare bzw. aufgenommene Lackdraht sehr funktionssicher in verschiedene Messpositionen in dem Messbereich des Sensors gebracht werden kann. Es ist auch möglich, dass sich die Messrichtung des Sensors quer, insbesondere senkrecht bzw. im Wesentlichen senkrecht, zu einer Längsachse L des in der Drahthalterung aufnehmbaren bzw. aufgenommenen Lackdrahtes erstreckt und wobei sich die Messrichtung insbesondere in horizontaler Richtung bzw. parallel zu dem Untergrund der Vorrichtung erstreckt. Bevorzugt ist der Sensor dann seitlich der Drahthalterung, insbesondere parallel zu dem Untergrund der Vorrichtung angeordnet.

Zur Lösung des technischen Problems lehrt die Erfindung außerdem ein Verfahren zur Bestimmung der Schichtdicke einer Drahtbeschichtung eines Lackdrahtes, insbesondere mit einer oben stehend beschriebenen Vorrichtung, wobei der Lackdraht in einer Drahthalterung aufgenommen wird, wobei die Drahthalterung mit dem darin aufgenommenen Lackdraht mittels einer Positionierungseinrichtung in eine erste Messposition gebracht wird, wobei - vorzugsweise anschließend - an einem der ersten Messposition zugeordneten Messpunkt die Schichtdicke der Drahtbeschichtung des Lackdrahtes mittels eines Sensors bestimmt wird,
wobei die Drahthalterung mit dem darin aufgenommenen Lackdraht - vorzugsweise daraufhin - mittels der Positionierungseinrichtung in eine zweite Messposition gebracht wird, wobei - vorzugsweise anschließend - an einem der zweiten Messposition zugeordneten Messpunkt die Schichtdicke der Drahtbeschichtung des Lackdrahtes mittels des Sensors bestimmt wird,
wobei die Positionierungseinrichtung - und bevorzugt der Sensor - von einer Steuerungseinrichtung gesteuert und/oder geregelt wird/werden
und wobei der erste Messpunkt und der zweite Messpunkt auf derselben, den Umfang des Lackdrahtes umlaufenden Umfangslinie angeordnet sind und/oder auf unterschiedlichen Längsachsen L des Lackdrahtes angeordnet sind.

Mit dem Ausdruck Umfangslinie ist im Rahmen der Erfindung eine den Umfang des Lackdrahtes - insbesondere steigungsfrei - umlaufende Linie gemeint. Die Umfangslinie umläuft den Umfang des Lackdrahtes somit. Mit dem Ausdruck Messposition ist im Rahmen der Erfindung bevorzugt eine Position der Drahthalterung mit dem darin aufgenommenen Lackdraht gemeint, wobei sich der Lackdraht, wenn sich die Drahthalterung mit dem darin aufgenommenen Lackdraht in einer Messposition befindet, vorzugsweise in dem Messbereich des Sensors befindet. Einer Messposition ist vorzugsweise ein Messpunkt zugeordnet, an dem die Schichtdicke der Drahtbeschichtung des Lackdrahtes mittels des Sensors in der entsprechenden Messposition bestimmt wird. Bei einem Messpunkt handelt es sich somit insbesondere um eine Stelle des Lackdrahtes, an der die Schichtdicke der Drahtbeschichtung bestimmt wird.

Im Rahmen des erfindungsgemäßen Verfahrens ist beispielsweise einer ersten Messposition A ein Messpunkt a zugeordnet, an dem die Schichtdicke dₐ der Drahtbeschichtung des Lackdrahtes mittels des Sensors bestimmt wird. Der zugeordnete Messpunkt ergibt sich insbesondere aus der Messposition der Drahthalterung mit dem darin aufgenommenen Lackdraht und aus der Anordnung des Sensors hinsichtlich seiner Messrichtung und seines Messbereiches. Einer zweiten Messposition B ist im Rahmen des erfindungsgemäßen Verfahrens ein zweiter Messpunkt b zugeordnet, an dem die Schichtdicke d_{b} der Drahtbeschichtung des Lackdrahtes mittels des Sensors bestimmt wird. Die Positionierungseinrichtung bringt die Drahthalterung mit dem darin aufgenommenen Lackdraht vorzugsweise in die jeweilige Messposition. Dies geschieht insbesondere mittels bzw. aufgrund der Steuerung und/oder der Regelung der Positionierungseinrichtung durch die Steuerungseinrichtung.

Die Erfindung hat erkannt, dass mit der erfindungsgemäßen Vorrichtung bzw. mit dem erfindungsgemäßen Verfahren die Bestimmung der Schichtdicke der Drahtbeschichtung eines Lackdrahtes einfach und funktionssicher an zumindest zwei Messpunkten möglich ist, die auf derselben, den Umfang des Lackdrahtes umlaufenden Umfangslinie angeordnet sind und/oder auf unterschiedlichen Längsachsen L des Lackdrahtes angeordnet sind. Dadurch wird unter anderem ermöglicht, dass die Schichtdicke der Drahtbeschichtung an verschiedenen Messpunkten entlang des Umfangs des Lackdrahtes bestimmt werden kann, sodass Informationen über die Gleichmäßigkeit der Schichtdicke der Drahtbeschichtung in Umfangsrichtung erhalten werden können. Mit der Positionierungseinrichtung kann die Drahthalterung mit dem darin aufgenommenen Lackdraht einfach und funktionssicher in verschiedene Messpositionen gebracht werden, sodass an verschiedenen Messpunkten sehr flexibel die Schichtdicke der Drahtbeschichtung des Lackdrahtes bestimmt werden kann. Um die Drahthalterung mit dem darin aufgenommenen Lackdraht von einer Messposition in eine andere Messposition zu bringen, ist es bevorzugt, dass die Drahthalterung mit dem darin aufgenommenen Lackdraht mit zumindest einem Bewegungsfreiheitsgrad, vorzugsweise mit zumindest zwei, bevorzugt mit zumindest drei, Bewegungsfreiheitsgraden relativ zu dem Sensor bewegt wird.

Es ist im Rahmen des erfindungsgemäßen Verfahrens besonders bevorzugt, dass in zumindest drei Messpositionen, insbesondere in zumindest vier Messpositionen, vorzugsweise in zumindest fünf Messpositionen, bevorzugt in zumindest sechs Messpositionen, besonders bevorzugt in zumindest sieben Messpositionen, ganz besonders bevorzugt in zumindest acht Messpositionen, der Drahthalterung mit dem darin aufgenommenen Lackdraht jeweils an diesen Messpositionen zugeordneten Messpunkten die Schichtdicke der Drahtbeschichtung des Lackdrahtes mittels des Sensors bestimmt wird. Es ist weiter bevorzugt, dass in zumindest zehn, vorzugsweise in zumindest 20, besonders bevorzugt in zumindest 50, weiter bevorzugt in zumindest 100, weiter bevorzugt in zumindest 200, weiter bevorzugt in zumindest 500, weiter bevorzugt in zumindest 1000, sehr bevorzugt in zumindest 2000, ganz besonders bevorzugt in zumindest 3000, beispielsweise in zumindest 4000, Messpositionen der Drahthalterung mit dem darin aufgenommenen Lackdraht jeweils an diesen Messpositionen zugeordneten Messpunkten die Schichtdicke der Drahtbeschichtung des Lackdrahtes mittels des Sensors bestimmt wird. Dazu wird die Drahthalterung mit dem darin aufgenommenen Lackdraht mittels der Positionierungseinrichtung jeweils in die entsprechende Messposition gebracht und es wird mittels des Sensors die Schichtdicke der Drahtbeschichtung an dem zugeordneten Messpunkt bestimmt.

Es ist ganz besonders bevorzugt, dass zumindest drei, insbesondere zumindest vier, vorzugsweise zumindest fünf, bevorzugt zumindest sechs, besonders bevorzugt zumindest sieben und ganz besonders bevorzugt zumindest acht der den Messpositionen zugeordneten Messpunkte auf derselben den Umfang des Lackdrahtes umlaufenden Umfangslinie angeordnet sind und/oder auf unterschiedlichen Längsachsen L des Lackdrahtes angeordnet sind. Wenn gemäß bevorzugter Ausführungsform in zumindest zehn, vorzugsweise in zumindest 20, beispielsweise in zumindest 50 Messpositionen der Drahthalterung mit dem darin aufgenommenen Lackdraht jeweils an diesen Messpositionen zugeordneten Messpunkten die Schichtdicke der Drahtbeschichtung des Lackdrahtes mittels des Sensors bestimmt wird, dann ist es ganz besonders bevorzugt, dass zumindest zehn, insbesondere zumindest 20, vorzugsweise zumindest 50 der den Messpositionen zugeordneten Messpunkte auf derselben den Umfang des Lackdrahtes umlaufenden Umfangslinie angeordnet sind und/oder auf unterschiedlichen Längsachsen L des Lackdrahtes angeordnet sind. Längsachse L des Lackdrahtes meint im Rahmen der Erfindung im Übrigen insbesondere eine sich in Längsrichtung des Lackdrahtes und somit insbesondere senkrecht zur Drahtquerschnittsfläche erstreckende Achse. Bevorzugt sind zumindest 70 %, vorzugsweise zumindest 80 %, bevorzugt zumindest 90 %, sehr bevorzugt zumindest 95 %, weiter bevorzugt zumindest 98 % der Messpunkte auf derselben den Umfang des Lackdrahtes umlaufenden Umfangslinie angeordnet und/oder auf unterschiedlichen Längsachsen L des Lackdrahtes angeordnet. Ganz besonders bevorzugt sind sämtliche Messpunkte auf derselben den Umfang des Lackdrahtes umlaufenden Umfangslinie angeordnet und/oder auf unterschiedlichen Längsachsen L des Lackdrahtes angeordnet.

Es ist im Rahmen der Erfindung bevorzugt, dass der Lackdraht nach der Bestimmung der Schichtdicke an zumindest zwei auf derselben Umfangslinie und/oder auf unterschiedlichen Längsachsen L des Lackdrahtes angeordneten Messpunkten in Längsrichtung des Lackdrahtes - insbesondere durch die Positionierungseinrichtung und/oder manuell - bewegt wird und dass die Bestimmung der Schichtdicke dann in analoger Weise, vorzugsweise auf einer anderen Umfangslinie, wiederholt wird.

Bevorzugt ist der Lackdraht ein Flachdraht und sehr bevorzugt ein Rechteckdraht, insbesondere ein Rechteckdraht mit abgerundeten Ecken. Dann weist der Lackdraht im Querschnitt insbesondere vier Seiten und vier jeweils zwei Seiten miteinander verbindende Radien auf. Eine ganz besonders bevorzugte Ausführungsform des erfindungsgemäßen Verfahrens ist dadurch gekennzeichnet, dass der Lackdraht ein Flachdraht, insbesondere ein Rechteckdraht, vorzugsweise ein Rechteckdraht mit abgerundeten Ecken, ist und dass an zumindest einer Seite des Lackdrahtes, vorzugsweise an zumindest zwei Seiten des Lackdrahtes, bevorzugt an zumindest drei Seiten des Lackdrahtes, besonders bevorzugt an allen vier Seiten des Lackdrahtes und/oder an zumindest einem Radius des Lackdrahtes, vorzugsweise an zumindest zwei Radien des Lackdrahtes, bevorzugt an zumindest drei Radien des Lackdrahtes, besonders bevorzugt an allen vier Radien des Lackdrahtes zumindest ein Messpunkt angeordnet bzw. vorgesehen ist. Sehr bevorzugt ist der Flachdraht ein Rechteckdraht und ganz besonders bevorzugt ein Rechteckdraht mit abgerundeten Ecken. Im Rahmen einer solchen Ausführungsform, bei der der Lackdraht im Querschnitt vier Seiten und vier jeweils zwei Seiten miteinander verbindenden Radien aufweist, ist es besonders bevorzugt, wenn zumindest ein Messpunkt an jeder Drahtseite und zumindest ein Messpunkt an jedem Radius des Lackdrahtes vorgesehen ist. Vorzugsweise sind diese acht Messpunkte auf derselben den Umfang des Lackdrahtes umlaufenden Umfangslinie angeordnet. Dann können durch die Schichtdickenbestimmung an den acht Messpunkten Informationen über die Schichtdicke entlang des Drahtumfanges erhalten werden, ohne dass ein aus der Praxis bekanntes aufwändiges Querschnittsabbild bzw. Schliffbild erzeugt und unter dem Mikroskop ausgewertet werden muss. Durch die Aufnahme weiterer bzw. zusätzlicher Messpunkte an den Drahtseiten und/oder an den Drahtradien können noch genauere Informationen über die Schichtdicke bzw. die Gleichmäßigkeit der Schichtdicke der Drahtbeschichtung erhalten werden.

Gemäß ganz besonders bevorzugter Ausführungsform des erfindungsgemäßen Verfahrens wird entlang einer den Umfang des Lackdrahtes umlaufenden Umfangslinie des Lackdrahtes an einer Vielzahl von Messpunkten, die einer Vielzahl von Messpositionen der Drahthalterung mit dem darin aufgenommenen Lackdraht zugeordnet sind, die Schichtdicke der Drahtbeschichtung des Lackdrahtes mittels des Sensors bestimmt, insbesondere an zumindest zehn, vorzugsweise an zumindest zwölf, bevorzugt an zumindest 20, weiter bevorzugt an zumindest 50, besonders bevorzugt an zumindest 100, ganz besonders bevorzugt an zumindest 200, beispielsweise an zumindest 500 Messpunkten. Sämtliche dieser Messpunkte sind bevorzugt auf derselben Umfangslinie des Lackdrahtes angeordnet. Es ist weiter bevorzugt, dass entlang einer den Umfang des Lackdrahtes umlaufenden Umfangslinie des Lackdrahtes an zumindest 1000, weiter bevorzugt an zumindest 2000, weiter bevorzugt an zumindest 3000, sehr bevorzugt an zumindest 4000, Messpunkten, die zumindest 1000, weiter bevorzugt zumindest 2000, weiter bevorzugt zumindest 3000, sehr bevorzugt zumindest 4000, Messpositionen der Drahthalterung mit dem darin aufgenommenen Lackdraht zugeordnet sind, die Schichtdicke der Drahtbeschichtung des Lackdrahtes bestimmt wird. Sämtliche dieser Messpunkte sind bevorzugt auf derselben Umfangslinie des Lackdrahtes angeordnet.

Im Rahmen des erfindungsgemäßen Verfahrens ist es bevorzugt, dass mittels des Sensors an dem jeweiligen Messpunkt zumindest die Distanz des Sensors zu der Oberfläche der Drahtbeschichtung des Lackdrahtes und zumindest die Distanz des Sensors zu einem Leiterkern des Lackdrahtes bestimmt wird und wobei die Distanzen dazu insbesondere von einer Eingabe- und/oder Auswertungseinrichtung der Steuerungseinrichtung aus den Sensordaten ermittelt werden und wobei die Eingabe- und/oder Auswertungseinrichtung bevorzugt aus den Distanzen die Schichtdicke der Drahtbeschichtung des Lackdrahtes an dem jeweiligen Messpunkt ermittelt. Es ist im Rahmen der Erfindung möglich, dass der Sensor zunächst Sensordaten an allen vorgesehenen Messpunkten aufnimmt und dass aus diesen Daten anschließend die Distanzen und/oder die entsprechenden Schichtdicken ermittelt werden.

Im Rahmen der Erfindung ist der Sensor bevorzugt ein optischer Sensor und sehr bevorzugt ein chromatisch-konfokaler Sensor. Zur Einstellung bzw. Vorkalibrierung des Sensors ist es im Rahmen der Erfindung bevorzugt, dass die Schichtdicke der Drahtbeschichtung an einer Stelle des Lackdrahtes mittels eines Querschnittsabbildes bzw. Schliffbildes unter dem Mikroskop bestimmt und vorgegeben wird. Den Sensormesswerten, beispielsweise in Millivolt, kann dann vorzugsweise die vorbestimmte Schichtdicke zugeordnet werden, um den Sensor einzustellen bzw. vorzukalibrieren. Im Rahmen des erfindungsgemäßen Verfahrens wird - beispielsweise durch eine Benutzereingabe und/oder Benutzervorgabe - in der Steuerungseinrichtung vorzugsweise vorgegeben, in welchen Messpositionen der Drahthalterung und/oder an welchen Messpunkten die Schichtdicke der Drahtbeschichtung bestimmt werden soll und die Steuerungseinrichtung bringt die Positionierungseinrichtung bzw. die Drahthalterung mit dem darin aufgenommenen Lackdraht dann in die entsprechenden Messpositionen, um die Schichtdicke der Drahtbeschichtung an den vorgegebenen Messpunkten zu bestimmen. Dazu werden gemäß sehr bevorzugter Ausführungsform der Erfindung die Positioniertische entsprechend bewegt bzw. verfahren. Es ist bevorzugt, dass die Eingabe- und/oder Auswertungseinrichtung, die aus den Sensordaten die Schichtdicke an dem jeweiligen Messpunkt ermittelt, ein Computer ist.

Eine bevorzugte Ausführungsform des erfindungsgemäßen Verfahrens ist dadurch gekennzeichnet, dass zunächst ein Positionsreferenzbild des Lackdrahtes erzeugt wird und dass das Positionsreferenzbild vorzugsweise dazu verwendet wird, die Drahthalterung mit dem darin aufgenommenen Lackdraht mittels der Positionierungseinrichtung in bestimmte, den Messpunkten zugeordnete Messpositionen zu bringen. Vorzugsweise wird das Positionsreferenzbild dadurch erzeugt, dass der in der Drahthalterung aufgenommene Lackdraht unterhalb des Sensors - insbesondere in dem Messbereich des Sensors - bewegt wird, beispielsweise in horizontaler Richtung senkrecht zu einer Längsachse L des Lackdrahtes, bis der Draht aus dem Messbereich des Sensors gerät. Anschließend wird der Draht um die Längsachse L um 90° gedreht und eine weitere Seite des Drahtes, beispielsweise eines Flachdrahtes bzw. Rechteckdrahtes, wird eingemessen, in dem die Seite unter dem Sensor bewegt wird, bis sie auf beiden Seiten aus dem Messbereich des Sensors gerät. Auf diese Weise kann zunächst ein Positionsreferenzbild, insbesondere bezüglich der Drahtdimensionen, erzeugt werden, das im Anschluss dazu verwendet werden kann, bestimmte Messpositionen der Drahthalterung und/oder Messpunkte vorzugeben, in/an denen die Schichtdicke der Drahtbeschichtung des Lackdrahtes bestimmt werden soll. Darüber hinaus können die ermittelten Schichtdicken im Rahmen dieser bevorzugten Ausführungsform - beispielsweise in einer grafischen Darstellung - den Messpunkten zugeordnet werden.

Die Erfindung betrifft außerdem die Verwendung einer erfindungsgemäßen Vorrichtung für die Bestimmung der Schichtdicke der Drahtbeschichtung eines Lackdrahtes. Es ist bevorzugt, dass die Schichtdicke der Drahtbeschichtung des Lackdrahtes 1 µm bis 500 µm, vorzugsweise 10 µm bis 400 µm, bevorzugt 20 µm bis 300 µm, sehr bevorzugt 30 µm bis 250 µm, besonders bevorzugt 50 µm bis 250 µm, beispielsweise 100 µm bis 250 µm, beträgt.

Der Erfindung liegt die Erkenntnis zugrunde, dass mit der erfindungsgemäßen Vorrichtung bzw. mit dem erfindungsgemäßen Verfahren sehr einfach, funktionssicher und sehr flexibel Informationen über die Schichtdicke der Drahtbeschichtung eines Lackdrahtes erhalten werden können. Es ist insbesondere möglich, die Schichtdicke der Drahtbeschichtung an zumindest zwei Messpunkten zu bestimmen, wobei die Messpunkte erfindungsgemäß auf derselben, den Umfang des Lackdrahtes umlaufenden Umfangslinie angeordnet sind und/oder auf unterschiedlichen Längsachsen L des Lackdrahtes angeordnet sind. Wenn gemäß bevorzugter Ausführungsform der Erfindung die Schichtdicke der Drahtbeschichtung in einer Vielzahl von Messpositionen bzw. an diesen Messpositionen zugeordneten Messpunkten bestimmt wird, können noch genauere Informationen über die Schichtdicke der Drahtbeschichtung und insbesondere auch über die Gleichmäßigkeit der Schichtdicke der Drahtbeschichtung erhalten werden. Damit ist es beispielsweise im Falle eines Rechteckdrahtes, insbesondere eines Rechteckdrahtes mit abgerundeten Ecken, möglich, Informationen über die Schichtdicke an allen vier Seiten und/oder an allen vier Radien zu erhalten, wobei die entsprechenden Messpunkte vorzugsweise auf derselben den Umfang des Lackdrahtes umlaufenden Umfangslinie angeordnet sind. Dadurch kann die aus der Praxis bekannte Erzeugung aufwendiger Querschnittsabbilder bzw. Schliffbilder und deren Auswertung unter dem Mikroskop vermieden werden und es ist möglich, die erfindungsgemäße Vorrichtung und das erfindungsgemäße Verfahren zur Qualitätskontrolle nach der Fertigung der Lackdrähte einzusetzen, um entsprechende Informationen über die Schichtdicke und insbesondere auch über die Gleichmäßigkeit der Schichtdicke der Drahtbeschichtung zu erhalten. Es ist außerdem zu betonen, dass die erfindungsgemäße Vorrichtung und das erfindungsgemäße Verfahren sich insbesondere auch durch Einfachheit und wenig aufwendige Maßnahmen auszeichnen und daher auch sehr wirtschaftlich sind.

Nachfolgend wird die Erfindung anhand einer lediglich ein Ausführungsbeispiel darstellenden Zeichnung näher erläutert. Es zeigen in schematischer Darstellung:
- Fig. 1:: Eine erfindungsgemäße Vorrichtung in einer perspektivischen Ansicht
- Fig. 2:: Ein Verfahrensschema für die Bestimmung der Schichtdicke einer Drahtbeschichtung im Rahmen des erfindungsgemäßen Verfahrens
- Fig. 3:: Einen Querschnitt durch einen Lackdraht, dessen Schichtdicke der Drahtbeschichtung mit der erfindungsgemäßen Vorrichtung bzw. im Rahmen des erfindungsgemäßen Verfahrens bestimmt werden kann.

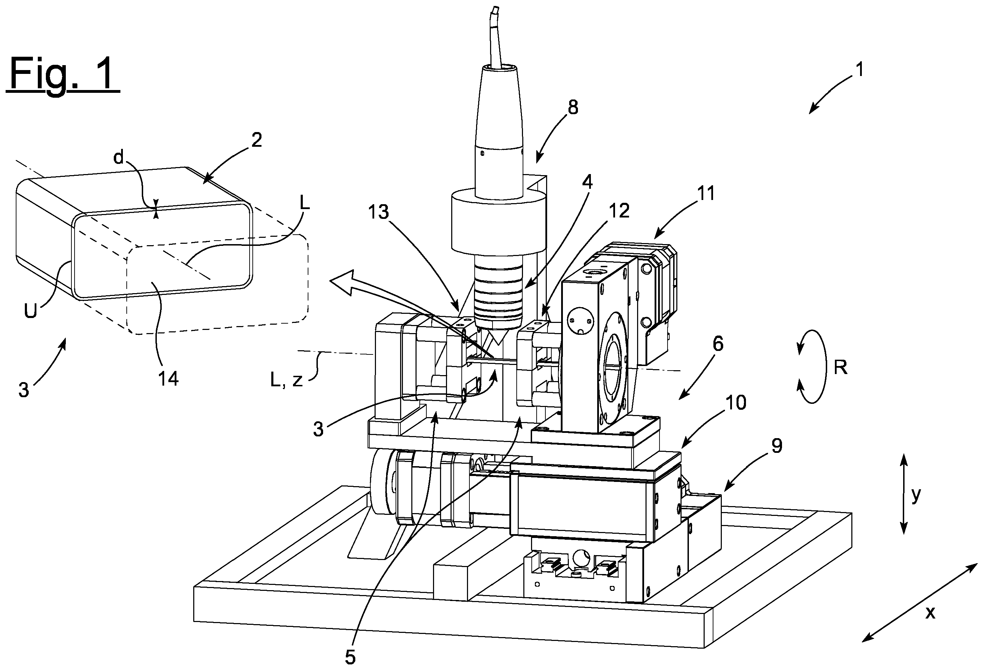

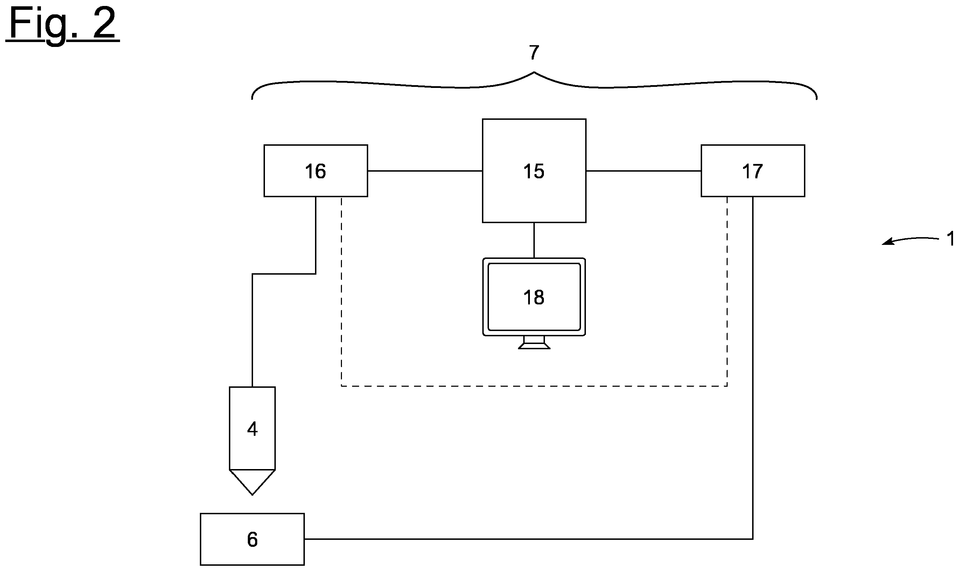

Die Figur 1 zeigt eine erfindungsgemäße Vorrichtung 1 zur Bestimmung der Schichtdicke d einer Drahtbeschichtung 2 eines Lackdrahtes 3. Die erfindungsgemäße Vorrichtung 1 weist einen Sensor 4 auf, der zweckmäßigerweise und im Ausführungsbeispiel als chromatisch-konfokaler Sensor 4 ausgebildet ist. Der Sensor 4 ist zweckmäßigerweise und im Ausführungsbeispiel in einer Sensorhalterung 8 aufgenommen und ist vorzugsweise und im Ausführungsbeispiel fixiert. Der Sensor 4 ist weiter bevorzugt und im Ausführungsbeispiel gemäß Figur 1 oberhalb einer Drahthalterung 5 angeordnet, in der der Lackdraht 3 aufgenommen ist. Die Vorrichtung 1 weist erfindungsgemäß außerdem eine Positionierungseinrichtung 6 auf, mittels der die Drahthalterung 5 mit dem darin aufgenommenen Lackdraht 3 bevorzugt und im Ausführungsbeispiel gemäß Figur 1 in zumindest drei Bewegungsfreiheitsgraden x, y und R beweglich ist. Die Vorrichtung 1 weist außerdem eine - in der Figur 1 nicht näher dargestellte - Steuerungseinrichtung 7 auf, die vorzugsweise und im Ausführungsbeispiel die Positionierungseinrichtung 6 und den Sensor 4 steuert und/oder regelt. Das ist insbesondere in der Figur 2 zu erkennen.

Mittels der Positionierungseinrichtung 6 kann die Drahthalterung 5 mit dem darin aufgenommenen Lackdraht 3 relativ zu dem Sensor 4 bewegt werden, sodass die Drahthalterung 5 bzw. der darin aufgenommene Lackdraht 3 in verschiedene Messpositionen gebracht werden kann. Gemäß bevorzugter Ausführungsform der Erfindung und im Ausführungsbeispiel gemäß Figur 1 sind die drei Bewegungsfreiheitsgrade der Drahthalterung 5 mit dem darin aufgenommenen Lackdraht 3 die Translation in horizontaler Richtung x senkrecht bzw. im Wesentlichen senkrecht zu einer Längsachse L des Lackdrahtes 3, die Auf-/Abwärtstranslation in vertikaler Richtung y und die Rotation R um eine Längsachse L des Lackdrahtes 3. Längsachse L des Lackdrahtes 3 meint im Rahmen der Erfindung insbesondere eine entlang der Längserstreckung des Lackdrahtes 3 verlaufende Achse des Lackdrahtes 3, vorzugsweise und im Ausführungsbeispiel seine Längsmittelachse L. Die Längsmittelachse L des Lackdrahtes erstreckt sich im Ausführungsbeispiel gemäß Figur 1 in z-Richtung.

Die Positionierungseinrichtung 6 der erfindungsgemäßen Vorrichtung 1 weist gemäß bevorzugter Ausführungsform und im Ausführungsbeispiel drei Positioniertische 9, 10, 11 auf, wobei ganz besonders bevorzugt und im Ausführungsbeispiel jeweils einem Bewegungsfreiheitsgrad x, y, R der Drahthalterung 5 mit dem darin aufgenommenen Lackdraht 3 jeweils ein Positioniertisch 9, 10, 11 zugeordnet ist. Bevorzugt und im Ausführungsbeispiel sind die drei Positioniertische 9, 10, 11 motorisiert ausgebildet. Sehr bevorzugt und im Ausführungsbeispiel gemäß Figur 1 werden als Positioniertische 9, 10, 11 ein Lineartisch 9, ein Hubtisch 10 und ein Rotationstisch 11 eingesetzt. Der Lineartisch 9 ist bevorzugt und im Ausführungsbeispiel der Translation der Drahthalterung 5 mit dem darin aufgenommenen Lackdraht 3 in horizontaler Richtung x senkrecht bzw. im Wesentlichen senkrecht zu der Längsmittelachse L des Lackdrahtes 3 zugeordnet. Der Hubtisch 10 ist bevorzugt und im Ausführungsbeispiel der Auf-/Abwärtstranslation der Drahthalterung 5 mit dem darin aufgenommenen Lackdraht 3 in vertikaler Richtung y zugeordnet. Der Rotationstisch 11 ist weiter bevorzugt und im Ausführungsbeispiel der Rotation R der Drahthalterung 5 mit dem darin aufgenommenen Lackdraht 3 um die Längsmittelachse L des Lackdrahtes 3 zugeordnet.

Die drei Positioniertische 9, 10, 11 der Positionierungseinrichtung 6 sind gemäß bevorzugter Ausführungsform und im Ausführungsbeispiel miteinander verbunden und aufeinander angeordnet. Der der Translation der Drahthalterung 5 mit dem darin aufgenommenen Lackdraht 3 in horizontaler Richtung x senkrecht bzw. im Wesentlichen senkrecht zu der Längsmittelachse L des Lackdrahtes zugeordnete Lineartisch 9 bildet die Basis der Positionierungseinrichtung 6 und ist vorzugsweise und im Ausführungsbeispiel der unterste der drei Positioniertische 9, 10, 11. Der der Rotation R der Drahthalterung 5 mit dem darin aufgenommenen Lackdraht 3 um die Längsmittelachse L des Lackdrahtes 3 zugeordnete Rotationstisch 11 bildet bevorzugt und im Ausführungsbeispiel den obersten Positioniertisch der Positionierungseinrichtung 6. Der der Auf-/Abwärtstranslation der Drahthalterung 5 mit dem darin aufgenommenen Lackdraht 3 in vertikaler Richtung y zugeordnete Hubtisch 10 ist bevorzugt und im Ausführungsbeispiel zwischen dem Lineartisch 9 und dem Rotationstisch 11 angeordnet und bildet gleichsam einen mittleren Positioniertisch.

Zweckmäßigerweise und im Ausführungsbeispiel gemäß der Figur 1 ist zumindest ein Teil der Drahthalterung 5 mit dem der Rotation R der Drahthalterung 5 mit dem darin aufgenommenen Lackdraht 3 um die Längsmittelachse L des Lackdrahtes 3 zugeordneten Positioniertisch 11 verbunden. Sehr bevorzugt und im Ausführungsbeispiel weist die Drahthalterung 5 zumindest zwei gegenüberliegend angeordnete Einspannvorrichtungen 12, 13 in Form von zwei Einspannblöcken 12, 13 auf, zwischen denen der Lackdraht 3 aufnehmbar bzw. einspannbar ist. Bevorzugt und im Ausführungsbeispiel ist ein Einspannblock 12 mit der Positionierungseinrichtung 6 verbunden und zwar bevorzugt und im Ausführungsbeispiel mit dem Rotationstisch 11 verbunden. Der andere Einspannblock 13 ist gemäß bevorzugter Ausführungsform und im Ausführungsbeispiel drehbar gelagert. Auf diese Weise kann der zwischen den beiden Einspannblöcken 12, 13 aufgenommene bzw. eingespannte Lackdraht 3 bevorzugt und im Ausführungsbeispiel um seine Längsmittelachse L mittels des Rotationstisches 11 gedreht werden. Dazu wird der erste Einspannblock 12, der mit dem Rotationstisch 11 verbunden ist, durch den Rotationstisch bewegt und der gegenüberliegend angeordnete zweite Einspannblock 13, der drehbar gelagert ist, dreht entsprechend mit.

Bevorzugt und im Ausführungsbeispiel gemäß Figur 1 ist der Lackdraht 3 derart in der Drahthalterung 5 aufgenommen, dass die Längsmittelachse L des Lackdrahtes 3 in Horizontalrichtung bzw. parallel zum Untergrund der Vorrichtung 1 verläuft und darüber hinaus ist der Lackdraht 3 bevorzugt und im Ausführungsbeispiel derart in der Drahthalterung 5 - und zwar im Ausführungsbeispiel zwischen den Einspannblöcken 12, 13 - angeordnet bzw. eingespannt, dass die Längsmittelachse L des Lackdrahtes 3 parallel zu einer Rotationsachse der Drahthalterung 5 bzw. der Einspannblöcke 12, 13 verläuft und bevorzugt und im Ausführungsbeispiel koaxial dazu verläuft.

Die Messrichtung bzw. die Messachse des Sensors 4 erstreckt sich im Übrigen gemäß bevorzugter Ausführungsform senkrecht bzw. im Wesentlichen senkrecht zu der Längsmittelachse L des in der Drahthalterung 5 aufgenommenen Lackdrahtes 3 und bevorzugt und im Ausführungsbeispiel gemäß Figur 1 in vertikaler Richtung y.

Die Figur 2 zeigt, dass die erfindungsgemäße Vorrichtung 1 weiterhin eine Steuerungseinrichtung 7 aufweist, die vorzugsweise und im Ausführungsbeispiel die Positionierungseinrichtung 6 und den Sensor 4 steuert und/oder regelt. Die Steuerungseinrichtung 7 weist eine Steuerungs- und/oder Regelungseinheit 16 für den Sensor 4 sowie eine Steuerungs- und/oder Regelungseinheit 17 für die Positionierungseinrichtung 6 auf. Mit der Steuerungs- und/oder Regelungseinheit 17 für die Positionierungseinrichtung 6 können vorzugsweise die Motoren der Positioniertische 9, 10, 11 gesteuert und/oder geregelt werden. Die Steuerungseinrichtung 7 weist darüber hinaus eine Eingabe- und/oder Auswertungseinrichtung 15 auf, die vorzugsweise und im Ausführungsbeispiel als Computer ausgebildet ist. Die Eingabe- und/oder Auswertungseinrichtung 15 weist bevorzugt und im Ausführungsbeispiel eine Anzeigeeinrichtung 18 in Form eines Displays auf. Die Steuerungs- und/oder Regelungseinheit 16 für den Sensor 4 und die Steuerungs- und/oder Regelungseinheit 17 für die Positionierungseinrichtung 6 sind vorzugsweise und im Ausführungsbeispiel jeweils kommunizierend mit der Eingabe- und/oder Auswertungseinrichtung 15 verbunden. Es ist möglich, dass auch die beiden Steuerungs- und/oder Regelungseinheiten 16, 17 kommunizierend miteinander verbunden sind. Das ist in der Fig. 2 gestrichelt dargestellt.

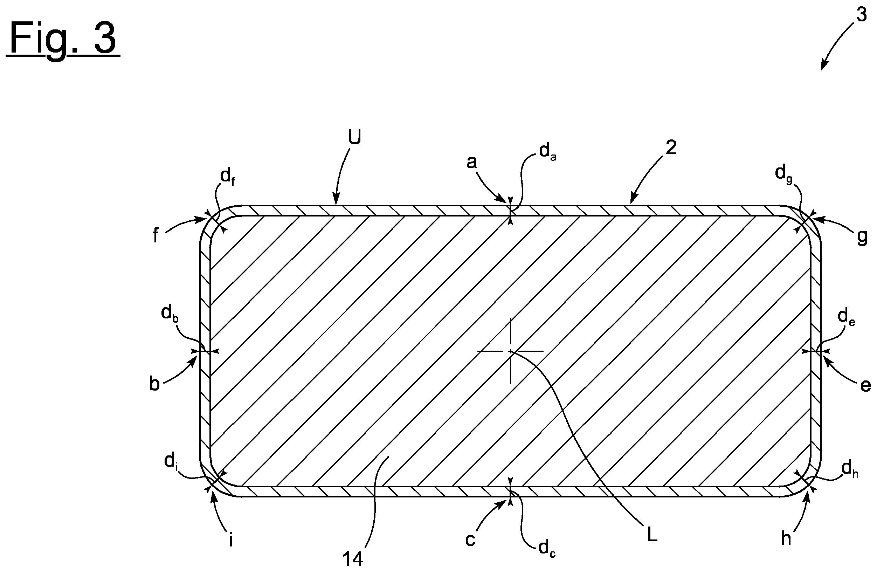

Mit der erfindungsgemäßen Vorrichtung 1 kann die Schichtdicke d einer Drahtbeschichtung 2 eines Lackdrahtes 3 bestimmt werden, der in der Drahthalterung 5 aufgenommen ist. Dazu wird die Drahthalterung 5 mit dem darin aufgenommenen Lackdraht 3 mittels der Positionierungseinrichtung 6 in eine erste Messposition A gebracht. Dazu kann vorzugsweise und im Ausführungsbeispiel eine erste Messposition A von einem Benutzer in der Eingabe- und/oder Auswertungseinrichtung 15, beispielsweise und im Ausführungsbeispiel in einem Computer, vorgegeben werden. Es wird - vorzugsweise anschließend - an einem der ersten Messposition A zugeordneten Messpunkt a die Schichtdicke dₐ der Drahtbeschichtung 2 des Lackdrahtes 3 mittels des Sensors 4 bestimmt (Fig. 3). Die Drahthalterung 5 mit dem darin aufgenommenen Lackdraht 3 wird - vorzugsweise daraufhin - mittels der Positionierungseinrichtung 6 in eine zweite Messposition B gebracht und es wird - vorzugsweise anschließend - an einem der zweiten Messposition B zugeordneten Messpunkt b die Schichtdicke d_{b} der Drahtbeschichtung 2 des Lackdrahtes 3 mittels des Sensors 4 bestimmt (Fig. 3). Um die Drahthalterung 5 bzw. den Lackdraht 3 von der Messposition A in die Messposition B zu bringen, wird die Drahthalterung 5 mit dem darin aufgenommenen Lackdraht 3 bevorzugt und im Ausführungsbeispiel beispielsweise um 45° um die Längsmittelachse L des Lackdrahtes 3 gedreht bzw. rotiert. Der Sensor 4 wird im Rahmen des erfindungsgemäßen Verfahrens und im Ausführungsbeispiel von der Steuerungseinrichtung 7 und insbesondere von der Steuerungs- und/oder Regelungseinheit 16 für den Sensor 4 gesteuert und/oder geregelt und zwar vorzugsweise entsprechend den Eingaben bzw. Vorgaben des Benutzers.

Die Positionierungseinrichtung 6 und vorzugsweise die Positioniertische 9, 10, 11 bzw. deren Motoren werden im Rahmen des erfindungsgemäßen Verfahrens vorzugsweise und im Ausführungsbeispiel von einer Steuerungs- und/oder Regelungseinheit 17 für die Positionierungseinrichtung 6 gesteuert und/oder geregelt. Die Steuerung und/oder Regelung des Sensors 4 und der Positionierungseinrichtung 6 mittels der Steuerungs- und/oder Regelungseinheiten 16, 17 erfolgt zweckmäßigerweise entsprechend den Benutzervorgaben und/oder entsprechend den Benutzervorgaben in der Eingabe- und/oder Auswertungseinrichtung 15. Wenn - insbesondere in der Eingabe- und/oder Auswertungseinrichtung 15 - mehrere Messpositionen vorgegeben werden, erfolgt die Positionierung der Drahthalterung 5 durch die Positionierungseinrichtung 6 und die Bestimmung der Schichtdicke d der Drahtbeschichtung 2 des Lackdrahtes 3 durch den Sensor 4 vorzugsweise entsprechend den Vorgaben automatisch. Es ist beispielsweise bevorzugt, in zumindest drei Messpositionen, insbesondere in zumindest vier Messpositionen, vorzugsweise in zumindest fünf Messpositionen, bevorzugt in zumindest sechs Messpositionen, besonders bevorzugt in zumindest sieben Messpositionen, ganz besonders bevorzugt in zumindest acht Messpositionen, der Drahthalterung 5 mit dem darin aufgenommenen Lackdraht 3 jeweils an diesen Messpositionen zugeordneten Messpunkten die Schichtdicke d der Drahtbeschichtung 2 des Lackdrahtes 3 mittels des Sensors 4 zu bestimmen.

Gemäß dem erfindungsgemäßen Verfahren sind der erste Messpunkt a und der zweite Messpunkt b auf derselben, den Umfang des Lackdrahtes 3 umlaufenden Umfangslinie U angeordnet und/oder auf unterschiedlichen Längsachsen L des Lackdrahtes 3 angeordnet. Das ist in der Figur 3 zu erkennen. Bevorzugt sind, wenn beispielsweise in zumindest acht Messpositionen der Drahthalterung 5 mit dem darin aufgenommenen Lackdraht 3 an diesen Messpositionen zugeordneten Messpunkten der Drahtbeschichtung 2 die Schichtdicke d der Drahtbeschichtung 2 des Lackdrahtes 3 mittels des Sensors 4 bestimmt wird, die acht den Messpositionen zugeordneten Messpunkte auf derselben den Umfang des Lackdrahtes 3 umlaufenden Umfangslinie U angeordnet und/oder sind auf unterschiedlichen Längsachsen L des Lackdrahtes angeordnet.

Sehr bevorzugt und im Ausführungsbeispiel gemäß den Figuren ist der Lackdraht 3 ein Flachdraht, insbesondere ein Rechteckdraht mit abgerundeten Ecken. Das ist in den Figuren 1 und 3 zu erkennen. Im Rahmen des erfindungsgemäßen Verfahrens ist vorzugsweise an allen vier Seiten dieses Rechteckdrahtes und an allen vier jeweils zwei dieser Seiten miteinander verbindenden Radien des Rechteckdrahtes zumindest ein Messpunkt a, b, c, e, f, g, h, i angeordnet bzw. vorgesehen. Das ist insbesondere in der Fig. 3 zu erkennen. Vorzugsweise und im Ausführungsbeispiel gemäß Fig. 3 sind die sich ergebenden zumindest acht Messpunkte a, b, c, e, f, g, h, i auf derselben den Umfang des Lackdrahtes 3 umlaufenden Umfangslinie U angeordnet. Dann können durch die Schichtdickenbestimmung an den zumindest acht Messpunkten a, b, c, e, f, g, h, i Informationen über die Schichtdicken dₐ, d_{b}, d_{c}, dₑ, d_{f}, d_{g}, dₕ, dᵢ entlang des Drahtumfanges erhalten werden ohne dass ein aus der Praxis bekanntes aufwändiges Querschnittsabbild bzw. Schliffbild erzeugt und ausgewertet werden muss. Die Aufnahme weiterer bzw. zusätzlicher Messpunkte an den Drahtseiten und/oder an den Drahtradien können noch genauere Informationen über die Schichtdicke bzw. die Gleichmäßigkeit der Drahtbeschichtung 2 liefern.

Es ist im Rahmen des erfindungsgemäßen Verfahrens bevorzugt, dass mittels des Sensors 4 an dem jeweiligen Messpunkt zumindest die Distanz des Sensors 4 zu der Oberfläche der Drahtbeschichtung 2 des Lackdrahtes 3 und zumindest die Distanz des Sensors 4 zu einem Leiterkern 14 des Lackdrahtes 3 bestimmt wird. Die Distanzen werden bevorzugt und im Ausführungsbeispiel von der Eingabe- und/oder Auswertungseinrichtung 15 der Steuerungseinrichtung 7 aus den Sensordaten ermittelt, wobei die Eingabe- und/oder Auswertungseinrichtung 15 bevorzugt aus den Distanzen die Schichtdicke d der Drahtbeschichtung des Lackdrahtes an dem jeweiligen Messpunkt ermittelt.

## Patentansprüche

1. Vorrichtung zur Bestimmung der Schichtdicke (d) einer Drahtbeschichtung (2) eines Lackdrahtes (3), wobei die Vorrichtung (1) zumindest einen Sensor (4), zumindest eine Drahthalterung (5), zumindest eine Positionierungseinrichtung (6) und zumindest eine Steuerungseinrichtung (7) aufweist, **dadurch gekennzeichnet, dass** die Drahthalterung (5) mit dem darin aufnehmbaren bzw. aufgenommenen Lackdraht (3) mittels der Positionierungseinrichtung (6) relativ zu dem Sensor (4) mit zumindest zwei Bewegungsfreiheitsgraden (x, y, R) beweglich ist, wobei die Steuerungseinrichtung (7) die Positionierungseinrichtung (6) - und bevorzugt den Sensor (4) - steuert und/oder regelt und wobei sich die Messrichtung des Sensors (4) quer, insbesondere senkrecht bzw. im Wesentlichen senkrecht, zu einer Längsachse (L) des in der Drahthalterung (5) aufnehmbaren bzw. aufgenommenen Lackdrahtes (3) erstreckt und wobei sich die Messrichtung insbesondere in vertikaler Richtung (y) erstreckt.

2. Vorrichtung nach Anspruch 1, wobei die Drahthalterung (5) mit dem darin aufnehmbaren bzw. aufgenommenen Lackdraht (3) mittels der Positionierungseinrichtung (6) relativ zu dem Sensor (4) mit zumindest drei Bewegungsfreiheitsgraden (x, y, R) beweglich ist.

3. Vorrichtung nach Anspruch 1 oder 2, wobei die Bewegungsfreiheitsgrade (x, y, R) der Drahthalterung (5) mit dem darin aufnehmbaren bzw. aufgenommenen Lackdraht (3) die Translation in horizontaler Richtung (x) quer, insbesondere senkrecht bzw. im Wesentlichen senkrecht, zu einer Längsachse (L) des Lackdrahtes (3) und/oder die Auf-/Abwärtstranslation in vertikaler Richtung (y) und/oder die Rotation (R) um eine Längsachse (L) - vorzugsweise um eine Längsmittelachse (L) - des Lackdrahtes (3) sind.

4. Vorrichtung nach einem der Ansprüche 1 bis 3, wobei der Sensor (4) fixiert ist und dazu insbesondere in einer Sensorhalterung (8) aufgenommen ist und wobei der Sensor (4) bevorzugt oberhalb der Drahthalterung (5) mit dem darin aufnehmbaren bzw. aufgenommenen Lackdraht (3) angeordnet ist.

5. Vorrichtung nach einem der Ansprüche 1 bis 4, wobei die Positionierungseinrichtung (6) zumindest einen Positioniertisch (9), vorzugsweise zumindest zwei Positioniertische (9, 10), bevorzugt zumindest drei Positioniertische (9, 10, 11), aufweist und wobei sehr bevorzugt jeweils einem Bewegungsfreiheitsgrad (x, y, R) der Drahthalterung (5) mit dem darin aufnehmbaren bzw. aufgenommenen Lackdraht (3) zumindest ein Positioniertisch (9, 10, 11), insbesondere ein Positioniertisch (9, 10, 11), zugeordnet ist.

6. Vorrichtung nach einem der Ansprüche 1 bis 5, wobei die Positionierungseinrichtung (6) motorisiert ausgebildet ist und wobei insbesondere zumindest ein Positioniertisch (9), vorzugsweise zumindest zwei Positioniertische (9, 10), bevorzugt zumindest drei Positioniertische (9, 10, 11), der Positionierungseinrichtung (6) motorisiert ausgebildet ist/sind.

7. Vorrichtung nach einem der Ansprüche 5 oder 6, wobei die Positioniertische (9, 10, 11) der Positionierungseinrichtung (6) miteinander verbunden sind und insbesondere übereinander, vorzugsweise aufeinander, angeordnet sind, wobei bevorzugt ein der Translation der Drahthalterung (5) mit dem darin aufnehmbaren bzw. aufgenommenen Lackdraht (3) in horizontaler Richtung (x) quer, insbesondere senkrecht bzw. im Wesentlichen senkrecht, zu einer Längsachse (L) des Lackdrahtes (3) zugeordneter Positioniertisch (9, 10) oder ein der Auf-/Abwärtstranslation der Drahthalterung (5) mit dem darin aufnehmbaren bzw. aufgenommenen Lackdraht (3) in vertikaler Richtung (y) zugeordneter Positioniertisch (9, 10) eine Basis der Positionierungseinrichtung (6) bildet, wobei besonders bevorzugt ein der Rotation (R) der Drahthalterung (5) mit dem darin aufnehmbaren bzw. aufgenommenen Lackdraht (3) um eine Längsachse (L) des Lackdrahtes (3) zugeordneter Positioniertisch (11) oberhalb des Positioniertisches bzw. der Positioniertische (9, 10) angeordnet ist, der/die der Translation in horizontaler Richtung (x) und/oder der Auf-/Abwärtstranslation in vertikaler Richtung (y) zugeordnet ist/sind.

8. Vorrichtung nach einem der Ansprüche 5 bis 7, wobei als Positioniertisch (9, 10, 11) zumindest ein Lineartisch (9) und/oder zumindest ein Hubtisch (10) und/oder zumindest ein Rotationstisch (11) eingesetzt wird/werden.

9. Vorrichtung nach einem der Ansprüche 5 bis 8, wobei zumindest ein Teil der Drahthalterung (5) mit dem Positioniertisch (11), insbesondere mit dem Rotationstisch (11), verbunden ist, der der Rotation (R) der Drahthalterung (5) mit dem darin aufnehmbaren bzw. aufgenommenen Lackdraht (3) um eine Längsachse (L) des Lackdrahtes (3) zugeordnet ist.

10. Vorrichtung nach einem der Ansprüche 1 bis 9, wobei die Drahthalterung (5) zumindest eine Einspannvorrichtung (12), vorzugsweise zumindest zwei - insbesondere gegenüberliegend angeordnete - Einspannvorrichtungen (12, 13), aufweist, wobei der Lackdraht (3) in der zumindest einen Einspannvorrichtung (12) einspannbar ist und insbesondere zwischen den zumindest zwei Einspannvorrichtungen (12, 13) einspannbar ist und wobei bevorzugt zumindest eine Einspannvorrichtung (12, 13) mit der Positionierungseinrichtung (6) verbunden ist, insbesondere mit dem Positioniertisch (11) verbunden ist, der der Rotation (R) der Drahthalterung (5) mit dem darin aufnehmbaren bzw. aufgenommenen Lackdraht (3) um eine Längsachse (L) des Lackdrahtes (3) zugeordnet ist, und wobei weiter bevorzugt zumindest eine Einspannvorrichtung (12,13) bzw. die andere Einspannvorrichtung (12, 13) drehbar gelagert ist.

11. Vorrichtung nach einem der Ansprüche 1 bis 10, wobei der Lackdraht (3) derart in der Drahthalterung (5) aufnehmbar ist bzw. aufgenommen ist, dass eine Längsachse (L) des Lackdrahtes (3) in Horizontalrichtung bzw. parallel zum Untergrund der Vorrichtung (1) verläuft und/oder wobei der Lackdraht (3) derart in der Drahthalterung (5), vorzugsweise in der zumindest einen Einspannvorrichtung (12, 13) der Drahthalterung (5), insbesondere zwischen den Einspannvorrichtungen (12, 13) der Drahthalterung (5), aufnehmbar bzw. aufgenommen, insbesondere einspannbar bzw. eingespannt, ist, dass eine Längsachse (L) des Lackdrahtes (3) parallel zur einer Rotationsachse der Drahthalterung (5), insbesondere der zumindest einen Einspannvorrichtung (12, 13) bzw. der Einspannvorrichtungen (12, 13) der Drahthalterung (5), verläuft und sehr bevorzugt koaxial dazu verläuft.

12. Vorrichtung nach einem der Ansprüche 1 bis 11, wobei der Sensor (4) ein optischer Sensor (4), vorzugsweise ein chromatisch-konfokaler Sensor (4), ist.

13. Verfahren zur Bestimmung der Schichtdicke (d) einer Drahtbeschichtung (2) eines Lackdrahtes (3), mit einer Vorrichtung (1) gemäß einem der Ansprüche 1 bis 12, wobei der Lackdraht (3) in einer Drahthalterung (5) aufgenommen wird, wobei die Drahthalterung (5) mit dem darin aufgenommenen Lackdraht (3) mittels einer Positionierungseinrichtung (6) in eine erste Messposition (A) gebracht wird, wobei an einem der ersten Messposition (A) zugeordneten Messpunkt (a) die Schichtdicke (dₐ) der Drahtbeschichtung (2) des Lackdrahtes (3) mittels eines Sensors (4) bestimmt wird,
wobei die Drahthalterung (5) mit dem darin aufgenommenen Lackdraht (3) mittels der Positionierungseinrichtung (6) in eine zweite Messposition (B) gebracht wird, wobei an einem der zweiten Messposition (B) zugeordneten Messpunkt (b) die Schichtdicke (d_{b}) der Drahtbeschichtung (2) des Lackdrahtes (3) mittels des Sensors (4) bestimmt wird,
wobei die Positionierungseinrichtung (6) - und bevorzugt der Sensor (4) - von einer Steuerungseinrichtung (7) gesteuert und/oder geregelt wird/werden,
wobei der erste Messpunkt (a) und der zweite Messpunkt (b) auf derselben, den Umfang des Lackdrahtes (3) umlaufenden Umfangslinie (U) angeordnet sind und/oder auf unterschiedlichen Längsachsen (L) des Lackdrahtes (3) angeordnet sind
und wobei sich die Messrichtung des Sensors (4) quer, insbesondere senkrecht bzw. im Wesentlichen senkrecht, zu einer Längsachse (L) des in der Drahthalterung (5) aufnehmbaren bzw. aufgenommenen Lackdrahtes (3) erstreckt und wobei sich die Messrichtung insbesondere in vertikaler Richtung (y) erstreckt.

14. Verfahren nach Anspruch 13, wobei in zumindest drei Messpositionen (A, B, C), insbesondere in zumindest vier Messpositionen (A, B, C, ...), vorzugsweise in zumindest fünf Messpositionen (A, B, C, ...), bevorzugt in zumindest sechs Messpositionen (A, B, C, ...), besonders bevorzugt in zumindest sieben Messpositionen (A, B, C, ...), ganz besonders bevorzugt in zumindest acht Messpositionen (A, B, C, ...), der Drahthalterung (5) mit dem darin aufgenommenen Lackdraht (3) jeweils an diesen Messpositionen (A, B, C, ...) zugeordneten Messpunkten (a, b, c, ...) die Schichtdicke (dₐ, d_{b}, d_{c}, ...) der Drahtbeschichtung (2) des Lackdrahtes (3) mittels des Sensors (4) bestimmt wird.

15. Verfahren nach Anspruch 14, wobei zumindest drei, insbesondere zumindest vier, vorzugsweise zumindest fünf, bevorzugt zumindest sechs, besonders bevorzugt zumindest sieben und ganz besonders bevorzugt zumindest acht der den Messpositionen (A, B, C, ...) zugeordneten Messpunkte (a, b, c, ...) auf derselben den Umfang des Lackdrahtes (3) umlaufenden Umfangslinie (U) angeordnet sind und/oder auf unterschiedlichen Längsachsen des Lackdrahtes (3) angeordnet sind.

16. Verfahren nach einem der Ansprüche 13 bis 15, wobei der Lackdraht (3) ein Flachdraht, vorzugsweise ein Rechteckdraht, insbesondere ein Rechteckdraht mit abgerundeten Ecken, ist und wobei an zumindest einer Seite des Lackdrahtes (3), vorzugsweise an zumindest zwei Seiten des Lackdrahtes (3), bevorzugt an zumindest drei Seiten des Lackdrahtes (3), besonders bevorzugt an allen vier Seiten des Lackdrahtes (3) und/oder an zumindest einem Radius des Lackdrahtes (3), vorzugsweise an zumindest zwei Radien des Lackdrahtes (3), bevorzugt an zumindest drei Radien des Lackdrahtes (3), besonders bevorzugt an allen vier Radien des Lackdrahtes (3), zumindest ein Messpunkt (a, b, c, ...) angeordnet bzw. vorgesehen ist.

17. Verfahren nach einem der Ansprüche 13 bis 16, wobei entlang einer den Umfang des Lackdrahtes (3) umlaufenden Umfangslinie (U) des Lackdrahtes (3) an einer Vielzahl von Messpunkten (a, b, c, ...), die einer Vielzahl von Messpositionen (A, B, C, ...) der Drahthalterung (5) mit dem darin aufgenommenen Lackdraht (3) zugeordnet sind, die Schichtdicke (dₐ, d_{b}, d_{c}, ...) der Drahtbeschichtung (2) des Lackdrahtes (3) mittels des Sensors (4) bestimmt wird, insbesondere an zumindest 10, vorzugsweise an zumindest 12, bevorzugt an zumindest 20, weiter bevorzugt an zumindest 50, besonders bevorzugt an zumindest 100, ganz besonders bevorzugt an zumindest 200, beispielsweise an zumindest 500 Messpunkten (a, b, c, ...).

18. Verfahren nach einem der Ansprüche 13 bis 17, wobei mittels des Sensors (4) an dem jeweiligen Messpunkt (a, b, c, ...) zumindest die Distanz des Sensors (4) zu der Oberfläche der Drahtbeschichtung (2) des Lackdrahtes (3) und zumindest die Distanz des Sensors (4) zu einem Leiterkern (14) des Lackdrahtes (3) bestimmt wird, wobei die Distanzen dazu insbesondere von einer Eingabe- und/oder Auswertungseinrichtung (15) der Steuerungseinrichtung (7) aus den Sensordaten ermittelt werden und wobei die Eingabe- und/oder Auswertungseinrichtung (15) bevorzugt aus den Distanzen die Schichtdicke (dₐ, d_{b}, d_{c}, ...) der Drahtbeschichtung (2) des Lackdrahtes an dem jeweiligen Messpunkt (a, b, c, ...) ermittelt.

19. Verfahren nach einem der Ansprüche 13 bis 18, wobei zunächst ein Positionsreferenzbild des Lackdrahtes (3) erzeugt wird und wobei das Positionsreferenzbild vorzugsweise dazu verwendet wird, die Drahthalterung (5) mit dem darin aufgenommenen Lackdraht (3) mittels der Positionierungseinrichtung (6) in bestimmte, den Messpunkten (a, b, c, ...) zugeordnete Messpositionen (A, B, C, ...) zu bringen.

## Claims

1. A device for determining the layer thickness (d) of a wire coating (2) of an enamelled wire (3), wherein the device (1) comprises at least one sensor (4), at least one wire holder (5), at least one positioning device (6) and at least one control device (7), **characterized in, that** the wire holder (5), with the enamelled wire (3) that can be, or has been, received therein, can be moved by means of the positioning device (6) relative to the sensor (4) with at least two degrees of freedom (x, y, R), wherein the control device (7) controls and/or regulates the positioning device (6) - and preferably the sensor (4) - and wherein the measurement direction of the sensor (4) extends transversely, in particular perpendicularly or substantially perpendicularly, to a longitudinal axis (L) of the enamelled wire (3) that can be, or has been, received in the wire holder (5), and wherein the measurement direction extends, in particular, in the vertical direction (y).

2. The device according to claim 1, wherein the wire holder (5), with the enamelled wire (3) that can be, or has been, received therein, is movable by means of the positioning device (6) relative to the sensor (4) with at least three degrees of freedom (x, y, R).

3. The device according to claim 1 or 2, wherein the degrees of freedom (x, y, R) of the wire holder (5), with the enamelled wire (3) that can be, or has been, received therein, are translation in the horizontal direction (x) transversely, in particular perpendicularly or substantially perpendicularly, to a longitudinal axis (L) of the enamelled wire (3) and/or upward/downward translation in the vertical direction (y) and/or rotation (R) about a longitudinal axis (L) - preferably about a central longitudinal axis (L) - of the enamelled wire (3).

4. The device according to any one of claims 1 to 3, wherein the sensor (4) is fixed and, in particular, for this purpose, is received, in a sensor holder (8), and wherein the sensor (4) is preferably arranged above the wire holder (5) with the enamelled wire (3) that can be, or has been, received therein.

5. The device according to any one of claims 1 to 4, wherein the positioning device (6) comprises at least one positioning stage (9), preferably at least two positioning stages (9, 10), more preferably at least three positioning stages (9, 10, 11), and wherein, very preferably, at least one positioning stage (9, 10, 11), in particular one positioning stage (9, 10, 11), is assigned to each degree of freedom (x, y, R) of the wire holder (5) with the enamelled wire (3) that can be, or has been, received therein.

6. The device according to any one of claims 1 to 5, wherein the positioning device (6) is motorized and wherein, in particular, at least one positioning stage (9), preferably at least two positioning stages (9, 10), more preferably at least three positioning stages (9, 10, 11), of the positioning device (6) is/are motorized.

7. The device according to any one of claims 5 or 6, wherein the positioning stages (9, 10, 11) of the positioning device (6) are connected to one another and are arranged, in particular, one above another, preferably one on another, wherein a positioning stage (9, 10) assigned to the translation of the wire holder (5), with the enamelled wire (3) that can be, or has been, received therein, in the horizontal direction (x) transversely, in particular perpendicularly or substantially perpendicularly, to a longitudinal axis (L) of the enamelled wire (3), or a positioning stage (9, 10) assigned to the upward/downward translation of the wire holder (5), with the enamelled wire (3) that can be, or has been, received therein, in the vertical direction (y) preferably forms a base of the positioning device (6), wherein, particularly preferably, a positioning stage (11) assigned to the rotation (R) of the wire holder (5), with the enamelled wire (3) that can be, or has been, received therein, about a longitudinal axis (L) of the enamelled wire (3) is arranged above the positioning stage or positioning stages (9, 10) assigned to the translation in the horizontal direction (x) and/or to the upward/downward translation in the vertical direction (y).

8. The device according to any one of claims 5 to 7, wherein at least one linear stage (9) and/or at least one lifting stage (10) and/or at least one rotary stage (11) is/are used as the positioning stage (9, 10, 11).

9. The device according to any one of claims 5 to 8, wherein at least part of the wire holder (5) is connected to the positioning stage (11), in particular to the rotary stage (11), which is assigned to the rotation (R) of the wire holder (5), with the enamelled wire (3) that can be, or has been, received therein, about a longitudinal axis (L) of the enamelled wire (3).

10. The device according to any one of claims 1 to 9, wherein the wire holder (5) comprises at least one clamping device (12), preferably at least two clamping devices (12, 13) - in particular arranged opposite one another - wherein the enamelled wire (3) can be clamped in the at least one clamping device (12) and, in particular, can be clamped between the at least two clamping devices (12, 13), and wherein at least one clamping device (12, 13) is preferably connected to the positioning device (6), in particular is connected to the positioning stage (11) assigned to the rotation (R) of the wire holder (5), with the enamelled wire (3) that can be, or has been, received therein, about a longitudinal axis (L) of the enamelled wire (3), and wherein, more preferably, at least one clamping device (12, 13) or the other clamping device (12, 13) is rotatably mounted.

11. The device according to any one of claims 1 to 10, wherein the enamelled wire (3) can be, or has been, received in the wire holder (5), such that a longitudinal axis (L) of the enamelled wire (3) extends in the horizontal direction or parallel to the support surface of the device (1), and/or in that the enamelled wire (3) can be, or has been, received, in particular can be, or has been, clamped, in the wire holder (5), preferably in the at least one clamping device (12, 13) of the wire holder (5), in particular between the clamping devices (12, 13) of the wire holder (5), such that a longitudinal axis (L) of the enamelled wire (3) extends parallel to an axis of rotation of the wire holder (5), in particular of the at least one clamping device (12, 13) or of the clamping devices (12, 13) of the wire holder (5), and very preferably extends coaxially therewith.

12. The device according to any one of claims 1 to 11, wherein the sensor (4) is an optical sensor (4), preferably a chromatic confocal sensor (4).

13. A method for determining the layer thickness (d) of a wire coating (2) of an enamelled wire (3) with a device (1) according to any one of claims 1 to 12, wherein the enamelled wire (3) is received in a wire holder (5), wherein the wire holder (5), with the enamelled wire (3) received therein, is brought into a first measurement position (A) by means of a positioning device (6), wherein the layer thickness (dₐ) of the wire coating (2) of the enamelled wire (3) is determined by means of a sensor (4) at a measurement point (a) assigned to the first measurement position (A),
wherein the wire holder (5), with the enamelled wire (3) received therein, is brought into a second measurement position (B) by means of the positioning device (6), wherein the layer thickness (d_{b}) of the wire coating (2) of the enamelled wire (3) is determined by means of the sensor (4) at a measurement point (b) assigned to the second measurement position (B),
wherein the positioning device (6) - and preferably the sensor (4) - is/are controlled and/or regulated by a control device (7),
wherein the first measurement point (a) and the second measurement point (b) are arranged on the same circumferential line (U) extending around the circumference of the enamelled wire (3) and/or are arranged on different longitudinal axes (L) of the enamelled wire (3),
and wherein the measurement direction of the sensor (4) extends transversely, in particular perpendicularly or substantially perpendicularly, to a longitudinal axis (L) of the enamelled wire (3) that can be, or has been, received in the wire holder (5), and wherein the measurement direction extends, in particular, in the vertical direction (y).

14. The method according to claim 13, wherein the layer thickness (dₐ, d_{b}, d_{c},...) of the wire coating (2) of the enamelled wire (3) is determined by means of the sensor (4) in at least three measurement positions (A, B, C), in particular in at least four measurement positions (A, B, C, ...), preferably in at least five measurement positions (A, B, C, ...), more preferably in at least six measurement positions (A, B, C, ...), particularly preferably in at least seven measurement positions (A, B, C, ...) and most particularly preferably in at least eight measurement positions (A, B, C, ...) of the wire holder (5) with the enamelled wire (3) received therein, in each case at measurement points (a, b, c, ...) assigned to these measurement positions (A, B, C, ...).

15. The method according to claim 14, wherein at least three, in particular at least four, preferably at least five, more preferably at least six, particularly preferably at least seven and most particularly preferably at least eight of the measurement points (a, b, c, ...) assigned to the measurement positions (A, B, C, ...) are arranged on the same circumferential line (U) extending around the circumference of the enamelled wire (3) and/or are arranged on different longitudinal axes of the enamelled wire (3).

16. The method according to any one of claims 13 to 15, wherein the enamelled wire (3) is a flat wire, preferably a rectangular wire, in particular a rectangular wire having rounded corners, and wherein at least one measurement point (a, b, c, ...) is arranged or provided on at least one side of the enamelled wire (3), preferably on at least two sides of the enamelled wire (3), more preferably on at least three sides of the enamelled wire (3), particularly preferably on all four sides of the enamelled wire (3), and/or at at least one radius of the enamelled wire (3), preferably at at least two radii of the enamelled wire (3), more preferably at at least three radii of the enamelled wire (3), particularly preferably at all four radii of the enamelled wire (3).

17. The method according to any one of claims 13 to 16, wherein the layer thickness (dₐ, d_{b}, d_{c},...) of the wire coating (2) of the enamelled wire (3) is determined by means of the sensor (4), along a circumferential line (U) of the enamelled wire (3) extending around the circumference of the enamelled wire (3), at a plurality of measurement points (a, b, c, ...) assigned to a plurality of measurement positions (A, B, C, ...) of the wire holder (5) with the enamelled wire (3) received therein, in particular at at least 10, preferably at at least 12, more preferably at at least 20, still more preferably at at least 50, particularly preferably at at least 100, most particularly preferably at at least 200, for example at at least 500 measurement points (a, b, c, ...).

18. The method according to any one of claims 13 to 17, wherein at least the distance from the sensor (4) to the surface of the wire coating (2) of the enamelled wire (3) and at least the distance from the sensor (4) to a conductor core (14) of the enamelled wire (3) are determined by means of the sensor (4) at the respective measurement point (a, b, c, ...), wherein, for this purpose, the distances are determined, in particular, from the sensor data by an input and/or evaluation device (15) of the control device (7), and wherein the input and/or evaluation device (15) preferably determines from the distances the layer thickness (dₐ, d_{b}, d_{c},...) of the wire coating (2) of the enamelled wire at the respective measurement point (a, b, c, ...).

19. The method according to any one of claims 13 to 18, wherein a positional reference image of the enamelled wire (3) is first generated and wherein the positional reference image is preferably used to bring the wire holder (5), with the enamelled wire (3) received therein, by means of the positioning device (6) into specific measurement positions (A, B, C, ...) assigned to the measurement points (a, b, c, ...).

## Revendications

1. Dispositif, destiné à déterminer l'épaisseur de couche (d) d'un enrobage de fil (2) d'un fil émaillé (3), le dispositif (1) comportant au moins un capteur (4), au moins un support de fil (5), au moins un système de positionnement (6) et au moins un système de commande (7), **caractérisé en ce que** le support de fil (5) avec le fil émaillé (3) pouvant y être reçu ou y étant reçu est déplaçable au moyen du système de positionnement (6) par rapport au capteur (4) avec au moins deux degrés de liberté (x, y, R) de déplacement, le système de commande (7) commandant et / ou régulant le système de positionnement (6) - et de manière préférentielle le capteur (4) - et la direction de mesure du capteur (4) s'étendant à la transversale, notamment à la perpendiculaire ou sensiblement à la perpendiculaire d'un axe longitudinal (L) du fil émaillé (3) pouvant être reçu ou étant reçu dans le support de fil (5) et la direction de mesure s'étendant notamment dans la direction verticale (y).

2. Dispositif selon la revendication 1, le support de fil (5) avec le fil émaillé (3) pouvant y être reçu ou y étant reçu étant déplaçable au moyen du système de positionnement (6) par rapport au capteur (4) avec au moins trois degrés de liberté (x, y, R) de déplacement.

3. Dispositif selon la revendication 1 ou 2, les degrés de liberté (x, y, R) de déplacement du support de fil (5) avec le fil émaillé (3) pouvant y être reçu ou y étant reçu étant la translation dans la direction horizontale (x), à la transversale, notamment à la perpendiculaire ou sensiblement à la perpendiculaire d'un axe longitudinal (L) du fil émaillé (3) et / ou la translation en montée / en descente dans la direction verticale (y) et / ou la rotation (R) autour d'un axe longitudinal (L) - de préférence autour d'un axe longitudinal médian (L) - du fil émaillé (3).

4. Dispositif selon l'une quelconque des revendications 1 à 3, le capteur (4) étant fixé et à cet effet étant reçu notamment dans un support de capteur (8) et le capteur (4) étant placé de manière préférentielle au-dessus du support de fil (5) avec le fil émaillé (3) pouvant y être reçu ou y étant reçu.

5. Dispositif selon l'une quelconque des revendications 1 à 4, le système de positionnement (6) comportant au moins une table de positionnement (9), de préférence au moins deux tables de positionnement (9, 10), de manière préférentielle au moins trois tables de positionnement (9, 10, 11), et de manière très préférentielle, au moins une table de positionnement (9, 10, 11), notamment une table de positionnement (9, 10, 11) étant respectivement associée à un degré de liberté (x, y, R) de déplacement du support de fil (5) avec le fil émaillé (3) pouvant y être reçu ou y étant reçu.

6. Dispositif selon l'une quelconque des revendications 1 à 5, le système de positionnement (6) étant conçu de manière motorisée et notamment au moins une table de positionnement (9), de préférence au moins deux tables de positionnement (9, 10), de manière préférentielle au moins trois tables de positionnement (9, 10, 11), du système de positionnement (6) étant conçue / conçues de manière motorisée.

7. Dispositif selon l'une quelconque des revendications 5 ou 6, les tables de positionnement (9, 10, 11) du système de positionnement (6) étant assemblées les unes avec les autres, étant notamment disposées les unes au-dessus des autres, de préférence les unes sur les autres, de manière préférentielle, une table de positionnement (9, 10) associée à la translation du support de fil (5) avec le fil émaillé (3) pouvant y être reçu ou y étant reçu dans la direction horizontale (x) à la transversale, notamment à la perpendiculaire ou sensiblement à la perpendiculaire d'un axe longitudinal (L) du fil émaillé (3) ou une table de positionnement (9, 10) associée à la translation en montée / en descente du support de fil (5) avec le fil émaillé (3) pouvant y être reçu ou y étant reçu dans la direction verticale (y) constituant une base du système de positionnement (6), de manière particulièrement préférentielle, une table de positionnement (11) associée à la rotation (R) du support de fil (5) avec le fil émaillé (3) pouvant y être reçu ou y étant reçu autour d'un axe longitudinal (L) du fil émaillé (3) étant placée au-dessus de la table de positionnement ou des tables de positionnement (9, 10) qui est / sont associée(s) à la translation dans la direction horizontale (x) et / ou à la translation en montée / en descente dans la direction verticale (y).

8. Dispositif selon l'une quelconque des revendications 5 à 7, en tant que table de positionnement (9, 10, 11) étant utilisée(s) au moins une table linéaire (9) et / ou au moins une table élévatrice (10) et / ou au moins une table de rotation (11).

9. Dispositif selon l'une quelconque des revendications 5 à 8, au moins une partie du support de fil (5) étant assemblée avec la table de positionnement (11), notamment avec la table de rotation (11) qui est associée à la rotation (R) du support de fil (5) avec le fil émaillé (3) pouvant y être reçu ou y étant reçu autour d'un axe longitudinal (L) du fil émaillé (3).

10. Dispositif selon l'une quelconque des revendications 1 à 9, le support de fil (5) comportant au moins un dispositif d'enserrage (12), de préférence au moins deux dispositifs d'enserrage (12, 13), - placés notamment en vis-à-vis - , le fil émaillé (3) pouvant être enserré dans l'au moins un dispositif d'enserrage (12) et pouvant être enserré notamment entre les au moins deux dispositifs d'enserrage (12, 13) et de manière préférentielle, au moins un dispositif d'enserrage (12, 13) étant assemblé avec le système de positionnement (6), étant assemblé notamment avec la table de positionnement (11) qui est associée à la rotation (R) du support de fil (5) avec le fil émaillé (3) pouvant y être reçu ou y étant reçu autour d'un axe longitudinal (L) du fil émaillé (3) et de manière préférentielle par ailleurs, au moins un dispositif d'enserrage (12, 13) ou l'autre dispositif d'enserrage (12, 13) étant logé de manière rotative.

11. Dispositif selon l'une quelconque des revendications 1 à 10, le fil émaillé (3) pouvant être reçu ou étant reçu dans le support de fil (5), de telle sorte qu'un axe longitudinal (L) du fil émaillé (3) s'écoule dans la direction horizontale ou à la parallèle de la surface de base du dispositif (1) et / ou le fil émaillé (3) pouvant être reçu ou étant reçu, notamment pouvant être enserré ou étant enserré dans le support de fil (5), de préférence dans l'au moins un dispositif d'enserrage (12, 13) du support de fil (5), notamment entre les dispositifs d'enserrage (12, 13) du support de fil (5), de telle sorte qu'un axe longitudinal (L) du fil émaillé (3) s'écoule à la parallèle d'un axe de rotation du support de fil (5), notamment de l'au moins un dispositif d'enserrage (12, 13) ou des dispositifs d'enserrage (12, 13) du support de fil (5) et de manière très préférentielle, s'écoulant de manière coaxiale par rapport à celui-ci.

12. Dispositif selon l'une quelconque des revendications 1 à 11, le capteur (4) étant un capteur (4) optique, de préférence un capteur (4) chromatique confocal.

13. Procédé, destiné à déterminer l'épaisseur de couche (d) d'un enrobage de fil (2) d'un fil émaillé (3) à l'aide d'un dispositif (1) selon l'une quelconque des revendications 1 à 12, le fil émaillé (3) étant reçu dans un support de fil (5), le support de fil (5) avec le fil émaillé (3) reçu dans celui-ci étant amené au moyen d'un système de positionnement (6) dans une première position de mesure (A), sur un point de mesure (a) associé à la première position de mesure (A), l'épaisseur de couche (dₐ) de l'enrobage de fil (2) du fil émaillé (3) étant déterminée au moyen d'un capteur (4),
le support de fil (5) avec le fil émaillé (3) reçu dans celui-ci étant amené au moyen du système de positionnement (6) dans une deuxième position de mesure (B), sur un point de mesure (b) associé à la deuxième position de mesure (B), l'épaisseur de couche (d_{b}) de l'enrobage de fil (2) du fil émaillé (3) étant déterminée au moyen du capteur (4),
le système de positionnement (6) - et de manière préférentielle, le capteur (4) - étant commandé(s) et / ou régulé(s) par un système de commande (7),
le premier point de mesure (a) et le deuxième point de mesure (b) étant placés sur la même ligne périphérique (U), faisant le tour de la périphérie du fil émaillé (3) et / ou étant placés sur différents axes longitudinaux (L) du fil émaillé (3)
et la direction de mesure du capteur (4) s'étendant à la transversale, notamment à la perpendiculaire ou sensiblement à la perpendiculaire d'un axe longitudinal (L) du fil émaillé (3) pouvant être reçu ou étant reçu dans le support de fil (5) et la direction de mesure s'étendant notamment dans la direction verticale (y).

14. Procédé selon la revendication 13, dans au moins trois positions de mesure (A, B, C), notamment dans au moins quatre positions de mesure (A, B, C, ...), de préférence dans au moins cinq positions de mesure (A, B, C, ... ), de manière préférentielle, dans au moins six positions de mesure (A, B, C, ...), de manière particulièrement préférentielle, dans au moins sept positions de mesure (A, B, C, ...), de manière tout particulièrement préférentielle, dans au moins huit positions de mesure (A, B, C, ...) du support de fil (5) avec le fil émaillé (3) reçu dans celui-ci, respectivement sur des points de mesure (a, b, c, ...) associés auxdites positions de mesure (A, B, C,...), l'épaisseur de couche (dₐ, d_{b}, d_{c}, ...) de l'enrobage de fil (2) du fil émaillé (3) étant déterminée au moyen du capteur (4).

15. Procédé selon la revendication 14, au moins trois, notamment au moins quatre, de préférence au moins cinq, de manière préférentielle au moins six, de manière particulièrement préférentielle au moins sept et de manière tout particulièrement préférentielle, au moins huit des points de mesure (a, b, c, ...) associés aux positions de mesure (A, B, C, ...) étant placés sur la même ligne périphérique (U) faisant le tour de la périphérie du fil émaillé (3) et / ou étant placés sur différents axes longitudinaux du fil émaillé (3).

16. Procédé selon l'une quelconque des revendications 13 à 15, le fil émaillé (3) étant un fil plat, de préférence un fil rectangulaire, notamment un fil rectangulaire à angles arrondis et sur au moins une face du fil émaillé (3), de préférence sur au moins deux faces du fil émaillé (3), de manière préférentielle sur au moins trois faces du fil émaillé (3), de manière particulièrement préférentielle sur toutes les quatre faces du fil émaillé (3) et / ou sur au moins un rayon du fil émaillé (3), de préférence sur au moins deux rayons du fil émaillé (3), de manière préférentielle sur au moins trois rayons du fil émaillé (3), de manière particulièrement préférentielle, sur tous les quatre rayons du fil émaillé (3) étant placé ou prévu au moins un point de mesure (a, b, c, ...).

17. Procédé selon l'une quelconque des revendications 13 à 16, le long d'une ligne périphérique (U) du fil émaillé (3) faisant le tour de la périphérie du fil émaillé (3), sur une pluralité de points de mesure (a, b, c, ...), qui sont associés à une pluralité de positions de mesure (A, B, C, ...) du support de fil (5) avec le fil émaillé (3) reçu dans celui-ci, l'épaisseur de couche (dₐ, d_{b}, dₑ, ...) de l'enrobage de fil (2) du fil émaillé (3) étant déterminée au moyen du capteur (4), notamment sur au moins 10, de préférence sur au moins 12, de manière préférentielle sur au moins 20, de manière préférentielle par ailleurs sur au moins 50, de manière particulièrement préférentielle sur au moins 100, de manière tout particulièrement préférentielle sur au moins 200, par exemple sur au moins 500 points de mesure (a, b, c, ...).

18. Procédé selon l'une quelconque des revendications 13 à 17, au moyen du capteur (4) sur le point de mesure (a, b, c, ...) respectif, au moins la distance du capteur (4) par rapport à la surface de l'enrobage de fil (2) du fil émaillé (3) et au moins la distance du capteur (4) par rapport à une âme de conducteur (14) du fil émaillé (3) étant déterminée, à cet effet, les distances étant établies notamment par un système de saisie et / ou d'évaluation (15) du système de commande (7) à partir des données du capteur et le système de saisie et / ou d'évaluation (15) établissant de manière préférentielle à partir des distances l'épaisseur de couche (dₐ, d_{b}, dₑ, ...) de l'enrobage de fil (2) du fil émaillé sur le point de mesure (a, b, c, ...) respectif.

19. Procédé selon l'une quelconque des revendications 13 à 18, d'abord une image de référence de position du fil émaillé (3) étant créée et l'image de référence de position étant employée de préférence pour amener le support de fil (5) avec le fil émaillé (3) reçu dans celui-ci au moyen du système de positionnement (6) dans des positions de mesure (A, B, C, ...) déterminées, associées aux points de mesure (a, b, c, ...).
